(19) Europäisches Patentamt
European Patent Office
Office européen des brevets

(11) **EP 3 757 300 B1**

(12) **EUROPÄISCHE PATENTSCHRIFT**

(45) Veröffentlichungstag und Bekanntmachung des Hinweises auf die Patenterteilung:
**27.12.2023 Patentblatt 2023/52**

(21) Anmeldenummer: **20178587.0**

(22) Anmeldetag: **05.06.2020**

(51) Internationale Patentklassifikation (IPC):
**E03B 1/04** *(2006.01)*     **A01G 25/16** *(2006.01)*
**E03B 3/03** *(2006.01)*

(52) Gemeinsame Patentklassifikation (CPC):
**E03B 1/042; A01G 25/167; E03B 3/03;**
E03B 2001/047; Y02A 20/108

(54) **WASSERBILANZSTEUERUNGSSYSTEM UND VERFAHREN ZU DESSEN BETRIEB**

WATER BALANCE CONTROL SYSTEM AND METHOD FOR OPERATING THE SAME

SYSTÈME DE COMMANDE DU BILAN HYDRIQUE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2019 DE 102019004445**

(43) Veröffentlichungstag der Anmeldung:
**30.12.2020 Patentblatt 2020/53**

(73) Patentinhaber: **Optigrün international AG**
**72505 Krauchenwies-Göggingen (DE)**

(72) Erfinder: **Gößner, Dominik**
**72505 Krauchenwies-Göggingen (DE)**

(74) Vertreter: **Maiwald GmbH**
**Elisenhof**
**Elisenstraße 3**
**80335 München (DE)**

(56) Entgegenhaltungen:
**WO-A2-2005/026053**     **US-A1- 2016 135 381**

**Beschreibung**

Die Erfindung betrifft ein Wasserbilanzsteuerungssystem sowie ein Verfahren zu dessen Betrieb, mit denen für den auf eine Auffangfläche niedergehenden Niederschlag eine gewünschte Wasserbilanz erzielt werden kann. Bei der Auffangfläche kann es sich um eine begrünte oder nicht begrünte Fläche oder um Kombinationen solcher Flächen handeln. Begrünte Flächen sind dabei insbesondere Dachbegrünungen, nicht begrünte Flächen beispielsweise Fahr- oder Gehwege, Parkplätze, bekieste Flächen, nicht begrünte Dachflächen oder nicht begrünte andere Flächen wie unbelegte Flächen (WU-Beton oder Ähnliches).

Unter einer Wasserbilanz wird in der Wasserwirtschaft üblicherweise die Bilanz aus Niederschlag, Verdunstung und Speicheränderung in Bezug auf ein bestimmtes Gebiet und einen bestimmten Zeitraum verstanden. Üblicherweise werden solche Wasserbilanzen dazu verwendet, zu ermitteln, wie viel Wasser in dem Gebiet zur Nutzung zur Verfügung steht und inwieweit die Wasserbilanz eines bebauten Zustands von dem zuvor unbebauten Zustand abweicht. Die Wasserbilanz wird mithilfe einer Wasserbilanzgleichung entsprechend der folgenden Formel ermittelt:

$$N = a + v \pm \Delta S \qquad \text{(Formel 1)}$$

wobei N den Niederschlag im Gebiet im bestimmten Zeitraum darstellt, a den Abfluss, v die Verdunstung und ΔS die Speicheränderung im Untergrund. Da ΔS für ausreichend lange Zeiträume vernachlässigt werden kann, gilt vereinfacht

$$N = a + v \qquad \text{(Formel 2)}$$

Der im bestimmten Gebiet im bestimmten Zeitraum niedergegangene Niederschlag teilt sich also in Abfluss a und Verdunstung v auf. Unter Abfluss a wird dabei der unter Einfluss der Schwerkraft das Gebiet verlassende Niederschlag verstanden. In der Natur teilt sich der Abfluss a in Niederschlag auf, welcher versickert und zur Grundwasserneubildung beiträgt, sowie Niederschlag, der oberflächlich hauptsächlich in Gewässer abfließt und aus dem Gebiet weg transportiert wird. Der Anteil der Verdunstung v setzt sich aus unmittelbarer Verdunstung (Evaporation), Abgabe aufgenommenen Niederschlags durch Pflanzen (Transpiration) sowie Interzeption (an der Oberfläche der Vegetation anhaftende Niederschläge, die verdunsten) zusammen. Letzterer Anteil der Niederschläge steht weder für die Grundwasserneubildung noch für das Pflanzenwachstum zur Verfügung und wird daher häufig als Interzeptionsverlust bezeichnet.

Welche Anteile Abfluss und Verdunstung an der Niederschlagsmenge eines Gebiets haben, hängt nicht nur von der Art des Gebiets selbst, sondern auch von den klimatischen Bedingungen ab. So ändern sich im Verlauf der Zeit diese Anteile. Beispielsweise nimmt in Deutschland nicht nur die Niederschlagsmenge im Sommer im Vergleich zu den übrigen Jahreszeiten zu, sondern aufgrund der höheren Temperaturen steigt auch der Anteil der Verdunstung gegenüber dem des Abflusses an. Der Anteil der Verdunstung hängt zudem stark von der Art der Vegetation im Gebiet ab, da sich sowohl Evaporation, Transpiration als auch Interzeption in Abhängigkeit vom Bewuchs ändern. Die Jahres-Wasserbilanz eines Fichtenwaldes setzt sich beispielsweise aus ungefähr 90 % Verdunstung, 10 % Versickerungsabfluss und 0 % Oberflächenabfluss zusammen, während die Anteile bei einer Wiese bei ca. 70 % Verdunstung, 25 % Versickerung und 5 % Oberflächenabfluss liegen.

Im Falle künstlich angelegter Vegetation, insbesondere im Falle der Konzeption von Dachbegrünungen, spielen Wasserbilanzen bislang, soweit bekannt, keine oder nur eine sehr eingeschränkte Rolle. Aufgabe und Ziel einer Dachbegrünung ist es bisher, auf der begrünten Dachfläche niedergegangenen Niederschlag für einen vorgegebenen Zeitraum zurückzuhalten und nur zeitlich verzögert an die Kanalisation abzugeben, um insbesondere bei Starkregenfällen eine Überlastung der Kanalisation zu vermeiden. Dies gelingt unter anderem dadurch, dass auf dem begrünten Dach Speicherraum für die Aufnahme der Niederschläge bereitgestellt wird. Das dort gespeicherte Regenwasser wird bevorzugt vollständig von der Vegetation der Dachbegrünung verbraucht und belastet die Kanalisation dann gar nicht. Eine Abgabe in die Kanalisation erfolgt nur dann, wenn die Speicherkapazität der Dachbegrünung nicht ausreicht. Ein derartiges System ist beispielsweise in der US 2016/0135381 A1 offenbart. In der EP2982810 A1 und EP 3202995 A1 hat die Anmelderin Dachbegrünungssysteme beschrieben, die es ermöglichen, vorausschauend unter Berücksichtigung von Wetterprognosedaten Speicherkapazität zur Aufnahme von Niederschlag zu schaffen und so die Kanalisation im Falle von starken Regenfällen effektiv zu entlasten. Die Dachbegrünungssysteme erlauben eine Überwachung von für die Dachbegrünung relevanten Parametern und eine anhand dieser Parameter gesteuerte Bewässerung der Vegetation des Gründachs, jedoch nicht die Einstellung einer vorgegebenen Wasserbilanz. WO 2005/026053 A2 beschreibt ein automatisiertes Regenwasserbewirtschaftungssystem, bei dem gesammeltes Regenwasser bei einem mittels Sensoren festgestellten Wasserbedarf an eine Verbrauchsstelle abgegeben wird.

Die Einstellung einer Wasserbilanz auf künstlich angelegten Flächen wie Dachbegrünungen, begeh- oder befahrbaren Flächen als Niederschlagsflächen erscheint jedoch vorteilhaft, da so beispielsweise über einen vorgegebenen Zeitraum ein bestimmter Abfluss vorgegeben und eingehalten werden kann, was eine gezieltere Auslegung der Kanalisation ermöglicht. Zudem kann durch Festlegung und Einstellung einer geeigneten Wasserbilanz ein weitgehend autarkes System geschaffen werden, das in der Regel ohne Bewässerung mit Leitungswasser auskommt. Von Vorteil könnte das System außerdem so ausgelegt werden, dass es eine Wasserbilanz aufweist, die derjenigen eines natürlichen Systems und insbesondere eines in die Umgebung passenden natürlichen Systems entspricht. Der Wasserhaushalt der künstlich angelegten Flächen entspricht dann demjenigen von deren natürlicher Umgebung.

Aufgabe der Erfindung ist es entsprechend, ein System anzugeben, welches die Einhaltung einer vorgegebenen Wasserbilanz ermöglicht und somit die vorstehend beschriebenen Eigenschaften und Vorteile aufweist, sowie ein Verfahren zum Betrieb eines solchen Wasserbilanzsteuerungssystems bereitzustellen.

Die Lösung dieser Aufgabe gelingt mit dem Wasserbilanzsteuerungssystem gemäß Anspruch 1 sowie dem Verfahren zu dessen Betrieb nach Anspruch 15. Bevorzugte Ausführungsformen und Verfahrensvarianten sind in den jeweiligen abhängigen Ansprüchen beschrieben.

In ihrem ersten Aspekt betrifft die Erfindung also ein Wasserbilanzsteuerungssystem mit wenigstens einer Auffangfläche zum Auffangen von Niederschlag. Bei dem Niederschlag wird es sich in der Regel um Regenwasser handeln, es könnte jedoch auch Schnee, Hagel, Graupel o. ä. sein. Der Einfachheit halber wird nachfolgend das Wasserbilanzsteuerungssystem auch nur als System bezeichnet. Das System weist weiter einen Speicherraum auf, der von der Auffangfläche ablaufenden Niederschlag aufnimmt. Über eine Entnahmeleitung kann Wasser aus dem Speicherraum entnommen werden, um es über eine Abgabevorrichtung einer Ausbringungsfläche zuzuführen. Hierfür ist ein Mittel zum steuerbaren Fördern des Wassers in der Entnahmeleitung vorhanden. Weiter gehören zum System verschiedene Sensoren, nämlich ein Sensor zur Ermittlung des Wasserstandes im Speicherraum sowie wenigstens ein Sensor zur Ermittlung einer Klimaeigenschaft in der Umgebung der Auffangfläche. Zum Empfang der von den Sensoren übermittelten Daten ist eine elektronische Auswertungseinheit vorgesehen, welche ausgebildet ist, die empfangenen Daten an eine elektronische Steuervorrichtung zu übermitteln. Letztere wiederum ist dazu ausgebildet, unter Verwendung der von der elektronischen Auswertungseinheit übermittelten Daten das Mittel zum steuerbaren Fördern des Wassers in der Entnahmeleitung so zu steuern, dass über einen vorgegebenen Zeitraum eine vorgegebene Wasserbilanz erzielt wird, welche für die während des Zeitraums auf die Auffangfläche niedergegangene Niederschlagsmenge durch vorgegebene Anteile von Verdunstung und Abfluss gekennzeichnet ist.

Im erfindungsgemäßen System erfolgt die Steuerung von Wasserabfluss von der Auffangfläche und Wasserabgabe auf die Ausbringungsfläche also in einer solchen Art und Weise, dass für die auf der Auffangfläche niedergegangene Niederschlagsmenge ein vorgegebenes Verhältnis von Verdunstung und Abfluss eingehalten wird. Diese Wasserhaushaltsbilanz beruht auf der eingangs beschriebenen Wasserbilanzformel, und zwar zweckmäßig auf der vereinfachten Wasserbilanz gemäß Formel 2. Entsprechend bezieht sich der Zeitraum vorzugsweise auf einen längeren Zeitraum von beispielsweise mehreren Monaten und insbesondere einem Jahr. Für diesen längeren Zeitraum können Speicheränderungen unberücksichtigt bleiben, sodass davon ausgegangen werden kann, dass sich die gesamte auf der Auffangfläche niedergehende Niederschlagsmenge in Verdunstung einerseits und Abfluss andererseits aufteilt.

Grundsätzlich kann die Aufteilung der Niederschlagsmenge in Verdunstung und Abfluss in beliebiger Art und Weise erfolgen, also im Bereich zwischen einem sehr großen Anteil Abfluss mit einem sehr geringen Anteil Verdunstung einerseits und einem sehr geringen Anteil Abfluss bei sehr hohem Anteil Verdunstung andererseits. Wie bereits beschrieben, ist es jedoch im Falle von Dachbegrünungen und auch ganz generell ein Ziel, den Anteil des Abflusses möglichst gering zu halten, um die Kanalisation zu entlasten. Entsprechend geht erfindungsgemäß die Tendenz eher dahin, den Anteil der Verdunstung möglichst groß und den des Abflusses möglichst gering zu halten. Auch in dem Fall, dass ein natürliches System als Muster für die Festlegung der Verdunstungs- und Abflussanteile dient, wird üblicherweise der Anteil des Abflusses deutlich geringer als derjenige der Verdunstung sein. Im Allgemeinen wird der Anteil der Verdunstung zwischen 31 bis 100 % liegen, bevorzugt bei 40 bis 98 %, besonders bevorzugt bei 50 bis 96 % und insbesondere bei 60 bis 95 %. Alternativ oder zusätzlich liegt der Anteil des Abflusses zweckmäßig bei 0 bis 70 %, bevorzugt bei 2 bis 60 %, besonders bevorzugt im Bereich von 4 bis 50 % und insbesondere zwischen 5 bis 40 %. Die Prozentangaben sind jeweils bezogen auf den auf der Auffangfläche niedergehenden Niederschlag.

Wie für eine natürliche Umgebung bekannt, setzt sich auch im erfindungsgemäßen Wasserbilanzsteuerungssystem der Anteil des Abflusses bevorzugt aus mehreren Komponenten zusammen, nämlich zweckmäßig aus Versickerung und direktem Abfluss. Der Anteil der Versickerung entspricht wie in der natürlichen Wasserbilanz demjenigen Anteil, der im Erdreich versickert wird und zur Grundwasserneubildung führen kann. Der Anteil des direkten Abflusses entspricht in einem natürlichen System dem Oberflächenabfluss, der im Wesentlichen in Gewässer gelangt und somit dem beobachteten System entzogen wird. Der Oberflächenabfluss wird im erfindungsgemäßen System dadurch simuliert, dass ein Abfluss vorgesehen ist, über den Wasser aus dem System hinaus transportiert werden kann, beispielsweise durch Einleitung in eine Kanalisation oder, falls dies möglich ist, direkt in ein Gewässer. Dabei liegt der Anteil des direkten Abflusses am Gesamtabfluss bevorzugt in einem Bereich von 0 bis 20 %, besonders bevorzugt 0 bis 15 % und insbesondere 0 bis 10 %. Der zu 100 % fehlende Anteil ist jeweils Versickerung.

In einer möglichen Ausführungsform kann das System von vornherein so konzipiert sein, dass gar kein Abfluss vorgesehen ist. Der von der Auffangfläche ablaufende Niederschlag wird also vollständig der Verdunstung zugeführt. Dies geschieht dadurch, dass mithilfe des Mittels zum steuerbaren Fördern von Wasser der von der Auffangfläche abgelaufene und im Speicherraum aufgenommene Niederschlag über eine Entnahmeleitung der Ausbringungsfläche zugeführt wird. Zum Ausbringen des Wassers auf der Ausbringungsfläche dient eine Abgabevorrichtung, bei der es sich beispielsweise um eine Tröpfchenbewässerung, eine Beregnungsvorrichtung, eine Vernebelungsanlage oder eine beliebige andere, aus dem Stand der Technik bekannte Bewässerungsvorrichtung handelt. Je nach Größe und Form der Ausbringungsfläche können selbstverständlich auch mehrere Abgabevorrichtungen auf der Ausbringungsfläche verteilt verwendet werden. Alternativ ist auch die Anordnung mehrerer Entnahmeleitungen möglich, die entweder jeweils ein eigenes Mittel zum steuerbaren Fördern von Wasser in der zugehörigen Entnahmeleitung aufweisen oder über einen Verteiler an ein gemeinsames Fördermittel angeschlossen sind. Jede der Entnahmeleitungen kann wiederum entweder mit einer oder mit mehreren Abgabevorrichtungen zum Ausbringen des Wassers auf der Ausbringungsfläche ausgestattet sein. Bei den Entnahmeleitungen (und allen übrigen Leitungen des Systems) handelt es sich zweckmäßig um im Stand der Technik übliche Rohrleitungen aus beispielsweise Metall oder Kunststoff, die eine grundsätzlich beliebige Querschnittsform aufweisen und starr oder flexibel ausgebildet sein können.

Ist für das erfindungsgemäße Wasserbilanzsteuerungssystem eine Wasserbilanz mit einem Abfluss von 0 % vorgegeben, setzt dies in der Regel einen ausreichend dimensionierten Speicherraum voraus, der auch bei stärkerem und länger andauerndem Niederschlag ausreichend Aufnahmekapazität für das von der Auffangfläche abgeleitete Wasser aufweist. Umgekehrt eignet sich dieses System jedoch auch für Gegenden, in denen die zu erwartende Niederschlagsmenge gering ist. Von Vorteil kann das System zudem in Gegenden eingesetzt werden, die noch nicht erschlossen sind und in denen keine Kanalisation zur Aufnahme eines Niederschlagsabflusses vorhanden ist. Ein möglicher Einsatzort sind also beispielsweise nicht erschlossene ländliche Gebiete mit vergleichsweise geringem Niederschlag.

Soll eine Wasserbilanz vorgegeben werden, bei der ein Abflussanteil von größer 0 vorgesehen ist, wird in einer bevorzugten Weiterbildung der Erfindung einem Abfluss über eine Abflussleitung, mit welcher Wasser aus dem Speicherraum entnommen werden kann, Wasser zugeführt, welches das Wasserbilanzsteuersystem über den Abfluss verlässt. Zur Förderung des Wassers in der Abflussleitung ist außerdem ein Mittel zum steuerbaren Abführen von Wasser vorhanden. Die elektronische Steuervorrichtung ist dann ausgebildet, unter Verwendung der von der elektronischen Auswertungseinheit übermittelten Daten das Mittel zum steuerbaren Fördern des Wassers in der Entnahmeleitung sowie das Mittel zum steuerbaren Abführen von Wasser über die Abflussleitung so zu steuern, dass über einen vorgegebenen Zeitraum die vorgegebene Wasserbilanz erzielt wird. Das aus dem Abfluss hinaus geförderte Wasser kann entweder als direkter Abfluss direkt einer Kanalisation (oder, wenn die Gegebenheiten es erlauben, einem Gewässer) zugeleitet und/oder versickert werden. Bevorzugt wird das Wasser zumindest teilweise und insbesondere vollständig versickert. Eine vollständige Versickerung ist beispielsweise erneut sinnvoll, wenn das erfindungsgemäße System in einer Gegend aufgebaut wird, in der keine Kanalisation vorhanden ist. Im Unterschied zum zuvor beschriebenen Ausführungsbeispiel ohne Versickerung können im Beispiel mit Versickerung und/oder direktem Abfluss größere Niederschlagsmengen gehandhabt werden, da durch die Versickerung und das Ablassen von Wasser über den Abfluss überschüssiges Wasser aus dem System entfernt werden kann. Es besteht zudem die Möglichkeit, die unterschiedlichsten Wasserbilanzen mit verschiedenen Anteiten von Verdunstung und Abfluss (Versickerung und/oder direkter Abfluss) vorzugeben. Konkret wird dazu zur Realisierung eines direkten Abflusses an dem vom Speicherraum abgelegenen Ende der Abflussleitung ein Abfluss in Form einer Einmündung in eine Kanalisation oder gegebenenfalls in ein Gewässer geschaffen. Zusätzlich oder alternativ kann zur Realisierung der Versickerung ein Versickerungsspeicher bereitgestellt werden, in den die Abflussleitung einmündet. Sind sowohl ein Versickerungsspeicher als auch ein Abfluss in die Kanalisation (oder ein Gewässer) vorhanden, umfasst das erfindungsgemäße System bevorzugt mehrere Abflussleitungen mit jeweils einem eigenen Mittel zum steuerbaren Abführen von Wasser, sodass der Abfluss in jeder der Abflussleitungen separat gesteuert werden kann. Zweckmäßig ist der Versickerungsspeicher unterirdisch angeordnet. Prinzipiell kann jeder geeignete Versickerungsspeicher verwendet werden, beispielsweise eine Mulde oder ein herkömmlicher Tiefbauspeicher, insbesondere eine Versickerungsrigole. Das im Versickerungsspeicher befindliche Wasser versickert nach und nach in den Boden.

Der Speicherraum, welcher der Aufnahme des von der Auffangfläche ablaufenden Niederschlags dient, sollte für die längerfristige Aufbewahrung des Niederschlags geeignet sein und vorzugsweise ein Verdunsten und Versickern des Wassers weitgehend verhindern. Solche Wasserspeicher sind grundsätzlich bekannt. Beispielsweise kann es sich um über- oder unterirdisch angeordnete Wassertanks handeln, insbesondere um einen abgedichteten Pufferspeicher und besonders bevorzugt um eine unterirdisch angeordnete gedichtete Rigole. Derartige Wasserspeicher sind beispielsweise als Tanks aus Metall oder Kunststoff ausgebildet oder weisen eine von einer Kunststofffolie umspannte Gerüststruktur auf. Beispiele solcher Rigolen sind in der EP 1 260 640 A1 und der EP 3 460 133 A1 beschrieben. Die dort erwähnten oder ähnliche Reinigungsvorstufen können im Rahmen der Erfindung ebenfalls eingesetzt werden, um eine Verschlammung der Rigolen zu verhindern. Grundsätzlich können auch gleiche oder unterschiedliche Typen von Wasserspeichern in Kombination miteinander verwendet werden. Dies wird zwar einen erhöhten Aufwand bei der Verbindung der Wasserspeicher untereinander und bei der Förderung des Wassers zwischen den Speichern verursachen, erlaubt andererseits jedoch im Hinblick auf den zur Verfügung stehenden Platz gegenüber der Aufstellung eines einzelnen großen Wasserspeichers eine flexiblere Anordnung. Der Einsatz von Modulen, die zu einer größeren Gesamtstruktur kombiniert werden, ermöglicht zudem die Verwendung vorgefertigter Baukörper, die für den jeweiligen Anwendungsfall miteinander kombiniert werden. Die Kombination verschiedener Speicher und/oder Modulbauteile eignet sich im Übrigen gleichermaßen auch für den Versickerungsspeicher.

Bei der Ausbringungsfläche kann es sich grundsätzlich um jede Fläche handeln, die zur Verdunstung des über die Entnahmeleitung und die Abgabevorrichtung zugeführten Niederschlages geeignet ist. Dies kann eine unbegrünte oder bevorzugt eine begrünte Fläche sein. Es muss sich dabei nicht um eine einheitliche Fläche handeln, sondern die Ausbringungsfläche kann aus mehreren, auch voneinander verschiedenen und räumlich voneinander getrennten Teilflächen gebildet werden, also beispielsweise begrünten und unbegrünten Teilflächen. Bevorzugt befindet sich die Ausbringungsfläche in unmittelbarer Nähe der übrigen Komponenten des Wasserbilanzsteuerungssystems. Es ist jedoch auch denkbar, die Ausbringungsfläche in größerem Abstand zum restlichen System anzuordnen, was dann jedoch die Verlängerung der Entnahmeleitung erfordert. In einer Variante der Erfindung ist die Ausbringungsfläche eine gartenbaulich und/oder landwirtschaftlich genutzte Fläche, also beispielsweise ein Gartenbeet oder ein landwirtschaftlich bestelltes Feld. In einer anderen Variante handelt es sich um landwirtschaftlich oder gartenbaulich nicht genutztes, aber bevorzugt bewachsenes Brachland wie beispielsweise eine Wiese. Durch Ausbringen des im Speicherraum gesammelten Niederschlages über die Entnahmeleitung und die Abgabevorrichtung auf die Ausbringungsfläche wird der Niederschlag der Verdunstung, Versickerung und gegebenenfalls dem direkten Abfluss zugeführt. Dies lässt sich auch erreichen, ohne dass eine Abflussleitung und ein Mittel zum steuerbaren Abführen von Wasser vorgesehen sind. Das Verhältnis von Verdunstung, Versickerung und direktem Abfluss ist dann von der Art der Ausbringungsfläche abhängig. Die jeweiligen Anteile lassen sich, wie eingangs beschrieben, der Fachliteratur entnehmen und werden bevorzugt vorab an Ort und Stelle in an sich bekannter Weise bestimmt. Für gleiche oder ähnliche Ausbringungsflächen (gleiche oder ähnliche kf-Werte Boden, gleiche oder ähnliche Boden- und Vegetationsart) kann auf früher ermittelte Werte zurückgegriffen werden. Anstatt dass der auf die Auffangfläche niedergehende Niederschlag also einfach nur der Kanalisation zugeleitet wird, wird er durch das erfindungsgemäße Wasserbilanzsteuerungssystem vielmehr auf einer Ausbringungsfläche ausgebracht und damit einer seiner natürlichen Verteilung ähnlichen Weise Verdunstung und Abfluss (Versickerung und gegebenenfalls direktem Abfluss) zugeführt.

In der vorstehend beschriebenen Ausführungsform wird die natürliche Aufteilung in Verdunstung und Abfluss dadurch erreicht, dass der auf der Auffangfläche niedergegangene Niederschlag in der natürlichen Umgebung der Auffangfläche unmittelbar Verdunstung, Versickerung und gegebenenfalls direktem Abfluss zugeführt wird. Ein Mittel zum steuerbaren Abführen von Wasser über eine Abflussleitung, Versickerungsspeicher und Kanalisation werden in diesem Fall nicht benötigt. Eine solche Handhabung ist beispielsweise in dünn besiedelten Gegenden möglich, in denen der Umgebung des Wasserbilanzsteuerungssystem ausreichend natürliche Flächen für die Ausbringung des Niederschlags zur Verfügung stehen. Das erfindungsgemäße Wasserbilanzsteuerungssystem lässt sich aber auch dort realisieren, wo solche natürlichen Ausbringungsflächen nicht vorhanden sind oder nicht genutzt werden können. In diesen Fällen werden die natürlichen Gegebenheiten mithilfe der Komponenten des Systems simuliert, um die natürliche Wasserverteilung zu realisieren.

In einer bevorzugten Ausführungsform der Erfindung entspricht die Ausbringungsfläche der Auffangfläche oder einer, vorzugsweise begrünten, Teilfläche davon. Das im Speicherraum gespeicherte Wasser wird also über die Entnahmeleitung und die Abgabevorrichtung zu der Auffangfläche zurückgeführt, damit es dort verdunsten kann. Diese Anordnung hat den Vorteil, dass im erfindungsgemäßen System keine zusätzliche Fläche zur Ausbringung des Niederschlags benötigt wird und das System insgesamt kompakt ausgebildet sein kann. Da derjenige Anteil des zur Auffangfläche zurück geförderten Niederschlags, der nicht verdunstet, über die Abflussleitung dem Speicherraum wieder zufließt und anders als bei einer natürlichen Ausbringungsfläche nicht versickert, muss für den Fall, dass ein Abflussanteil von größer 0 % vorgesehen werden soll, ein zusätzlicher Abfluss vorgesehen werden, dem entsprechend der vorgegebenen Wasserbilanz Niederschlag zur Versickerung und gegebenenfalls zum direkten Abfluss zugeführt wird. Dies geschieht zweckmäßig, wie vorstehend beschrieben, mittels der entsprechenden Fördermittel und eines Versickerungsspeichers.

Bei der Auffangfläche kann es sich um eine einzige zusammenhängende Fläche handeln, welche bevorzugt ganz oder zumindest teilweise mit einer Dachbegrünung versehen ist. Üblicherweise wird es sich bei begrünten Dachflächen um Flachdächer handeln, jedoch umfasst die Erfindung jegliche Art von Dachflächen, also auch geneigte Dächer, hochgelegene sowie ebenerdige Flächen, beispielsweise auch begrünte Tiefgaragendächer. Die Auffangfläche, die im Rahmen des Wasserbilanzsteuerungssystems der Erfindung Berücksichtigung finden kann, kann außerdem nicht-begrünte Flächen umfassen. Zu diesen zählen nicht-begrünte Dachflächen, beispielsweise Kiesdächer oder in sonstiger Weise gedeckte oder abgedichtete Dächer, sowie jegliche Art begeh- oder befahrbarer Flächen. Zu letzteren zählen beispielsweise mit einem Bodenbelag wie Kies oder Platten belegte oder zumindest teilweise betonierte Gehwege, Fahrwege, Zufahrten, einschließlich Tiefgaragenzufahrten, Parkplätze, Stellplätze für Zweiräder, Einkaufswagen usw. Entscheidend dafür, ob eine Fläche zur berücksichtigten Auffangfläche zählt, ist letztendlich, ob von dieser Fläche aufgefangener Niederschlag seinen Weg in einen Speicherraum des erfindungsgemäßen Wasserbilanzsteuerungssystems findet und somit zu dessen Einzugsgebiet gehört. Entsprechend kann die Auffangfläche auch aus mehreren Teilflächen bestehen, die untereinander nicht verbunden sein müssen, solange von ihnen ablaufender Niederschlag in den Speicherraum gelangt. Erfindungsgemäß bevorzugt ist es, dass wenigstens eine der Teilflächen zumindest teilweise begrünt ist. Außerdem ist es bevorzugt, dass die Rückführung des im Speicherraum gesammelten Niederschlags mithilfe des Mittels zum steuerbaren Fördern des Wassers über die Entnahmeleitung zumindest teilweise und bevorzugt vollständig zu dieser (teil-)begrünten Teilfläche erfolgt, wenn die Ausbringungsfläche die Auffangfläche ist.

Die Anordnung der Auffangfläche und des Speicherraums in Bezug aufeinander ist ein wesentliches Kriterium, das darüber entscheidet, in welcher Weise das Mittel zum steuerbaren Fördern des Wassers in der Entnahmeleitung, über die Wasser aus dem Speicherraum zur Auffangfläche zurück gefördert wird, ausgebildet ist. Wesentlich ist dabei insbesondere, ob sich der Speicherraum oberhalb der Auffangfläche befindet oder nicht. In ersterem Fall ist es möglich, Wasser allein aufgrund der Schwerkraft zur Auffangfläche zu fördern. Das Mittel zum steuerbaren Fördern des Wassers muss entsprechend nur in der Lage sein, die Entnahmeleitung nach Bedarf zu öffnen oder zu schließen. Eine steuerbare Klappe, ein steuerbarer Schieber, ein steuerbares Ventil, eine steuerbare Ablaufdrossel, wie sie beispielsweise in der EP2982810 A1 oder EP 3202995 A1 der Anmelderin beschrieben oder unter der Bezeichnung "Smart Flow Control" von der Anmelderin erhältlich ist, oder ähnliche steuerbare Verschlussmittel sind zu diesem Zweck geeignet. Eine Pumpe ist ebenfalls einsetzbar. Letztere ist als Mittel zum Fördern des Wassers bevorzugt, wenn sich die Auffangfläche oberhalb des Speicherraums befindet. Wie vorstehend bereits erwähnt, können auch verschiedene Teilspeicher verwendet werden, die gemeinsam den zur Verfügung stehenden Speicherraum ergeben. Sind diesen Teilspeichern unterschiedliche Mittel zum Fördern des Wassers zugeordnet, kann jedes der Fördermittel entsprechend in Abhängigkeit von der Anordnung des zugeordneten Teilspeichers ausgewählt werden.

Eine besonders bevorzugte Verwendung von Teilspeichern besteht in der Kombination einer Wasser-Retentionsbox, wie sie als Wasserspeicher einer Dachbegrünung aus dem Stand der Technik bekannt ist, und einem zusätzlichen Speicherraum, insbesondere in Form einer unterirdisch angeordneten gedichteten Rigole. Eine Wasser-Retentionsbox ist üblicherweise ein direkt unter einem Dachbegrünungs-Aufbau angeordneter, von einem Traggerüst definierter Hohlraum vergleichsweise geringer Höhe. Er nimmt von der Dachbegrünung nach unten durchsickernden Niederschlag auf. Ein unterer Bereich der Wasser-Retentionsbox ist in der Regel als Dauerspeicher ausgelegt, in dem ein relativ geringes Volumen an Niederschlag für die Dachbegrünung dauerhaft als Wasservorrat zur Verfügung gehalten wird. Außerdem ist üblicherweise ein gedrosselter Ablauf vorhanden, über welchen den Dauer-Wasservorrat übersteigendes überschüssiges Wasser mit einer vorgegebenen Abflussgeschwindigkeit der Kanalisation zugeleitet wird (vergleiche zum Beispiel EP1 001 107 A1). Alternativ kann der Wasserabfluss aus der Wasser-Retentionsbox, wie in den Anmeldungen EP2982810 A1 und EP 3202995 A1 beschrieben, mittels einer gesteuerten Ablaufdrossel eingestellt werden. Das Wasser des Dauer-Wasservorrats kann dazu verwendet werden, die Vegetation der Dachbegrünung mit Feuchtigkeit zu versorgen. Eine Möglichkeit der Wasserzufuhr besteht in der Verwendung von Kapillarvlies, beispielsweise in Form von zylindrischen Säulen oder Vliesbahnen, deren eines Ende in den Wasservorrat eintaucht und deren anderes Ende im Substrat der Dachbegrünung eingebettet ist. Das Vliesmaterial dient in beiden Fällen als Docht und saugt aufgrund der Kapillarwirkung Wasser aus dem Wasservorrat zur Befeuchtung des Substrats nach oben. Der Dauer-Wasservorrat der Wasser-Retentionsbox kann in einer Ausführungsvariante auch aus dem Wasservorrat des Wasserspeichers aufgefüllt werden. Alternativ kann mittels einer Pumpe über eine Saugleitung Wasser aus dem Wasservorrat zur Dachbegrünung transportiert und auf dieser mittels einer Bewässerungsvorrichtung verteilt werden. Geeignet sind beispielsweise Tropfschläuche einer Tröpfchenbewässerung oder eine Beregnungsvorrichtung.

Wird eine derartige Wasser-Retentionsbox im Rahmen der Erfindung als Teilspeicher verwendet, erfolgt die Ableitung des Wassers oder zumindest des überschüssigen Wassers nicht, wie im Stand der Technik üblich, in die Kanalisation, sondern in einen weiteren Speicherraum. Letzterer dient für das aus der Wasser-Retentionsbox abgeflossene Wasser als Dauerspeicher, aus welchem mithilfe der Entnahmeleitung und des Mittels zum steuerbaren Fördern des Wassers in der Entnahmeleitung Wasser zum Zweck der Verdunstung wieder auf die Auffangfläche zurück transportiert wird. Die Rückführung des Wassers aus dem Speicherraum kann dabei entweder direkt auf die Auffangfläche erfolgen (die Entnahmeleitung mündet direkt in eine auf der Auffangfläche angeordnete Abgabevorrichtung), oder die Rückführung des Wassers erfolgt indirekt. Letztere Möglichkeit ist vor allem dann bevorzugt, wenn auf der Dachbegrünung bereits eine Bewässerungsvorrichtung vorgesehen ist, welche aus dem Wasservorrat der Wasser-Retentionsbox gespeist wird. In diesem Fall erfolgt die Rückführung des Wassers aus dem Speicherraum zweckmäßig in die Wasser-Retentionsbox, von wo es mithilfe der vorhandenen Bewässerungsvorrichtung auf die Auffangfläche ausgebracht wird.

Eine besonders einfache Möglichkeit der Realisierung des erfindungsgemäßen Wasserbilanzsteuerungssystems besteht darin, eine Wasser-Retentionsbox unterhalb einer Dachbegrünung als einzigen Speicherraum zu verwenden. Damit der Speicherraum für die vollständige Aufnahme des ihm zufließenden Niederschlages ausreicht, wird die Wasser-Retentionsbox in der Regel ein größeres Volumen aufweisen als bislang üblich. Wegen des steigenden Platzbedarfs und Gewichts eignet sich diese Ausführungsform daher in erster Linie für Gebiete mit geringeren Niederschlagmengen, um den Platz- und Gewichtsanstieg überschaubar zu halten. Für die Rückführung gespeicherten Wassers kann prinzipiell ein für Dachbegrünungen mit Wasser-Retentionsbox bereits bekanntes Bewässerungssystem eingesetzt werden, wie vorstehend beschrieben wurde. Die Steuerung der Wasserrückführung erfolgt nun allerdings in anderer Weise als im Stand der Technik, nämlich mittels einer entsprechend ausgebildeten Steuervorrichtung unter Einhaltung einer vorgegebenen Wasserbilanz. Zu diesem Zweck ist der Speicherraum in Form der Wasser-Retentionsbox zudem mit einer Abflussleitung und einem Mittel zum steuerbaren Abführen von Wasser über die Abflussleitung zu einem Abfluss versehen sein. Zu den Einzelheiten kann auf das vorstehend Beschriebene verwiesen werden. Bei dem Abfluss kann es sich um eine Zuleitung in die Kanalisation, einen Versickerungsspeicher oder eine Kombination von beidem handeln.

Die Größe des Speicherraums und gegebenenfalls des Versickerungsspeichers wird in an sich bekannter Weise unter Berücksichtigung der zu erwartenden Niederschlagsmengen, die in den Speichern aufgenommen werden sollen, sowie den zu erwartenden Verweilzeiten des Wassers in den Speichern errechnet. Zur Berechnung wird insbesondere auf die Regelwerke DWA-A 138, DWA-A 117, DWA-A 118 sowie DIN 1986-100 und EN 752 verwiesen. Die Vorgaben der Wasserbilanz können ebenfalls berücksichtigt werden. Ein hoher Anteil Verdunstung erlaubt beispielsweise eine Verkleinerung des Speicherraums, da die Verdunstung durch Entnahme von Wasser aus dem Speicherraum über die Entnahmeleitung und Verteilung des Wassers auf der Auffangfläche erreicht wird. Allerdings fließt überschüssiges, auf der Auffangfläche nicht verdunstendes Wasser in einigen Ausführungsbeispielen wieder in den Speicherraum zurück, sodass auf diese Weise nur eine begrenzte Reduzierung des Wasservorrats im Speicherraum möglich ist. Das Ausmaß der Verdunstung ist dabei einerseits von Art und Größe der Auffangfläche abhängig, andererseits auch von den klimatischen Bedingungen. Erwartungsgemäß steigt die Verdunstung mit höherer Temperatur an und kann zudem durch höhere Windgeschwindigkeiten gefördert werden. Entsprechend werden klimatische Gegebenheiten im erfindungsgemäßen Bilanzsteuerungssystem ebenfalls berücksichtigt.

Um die klimatischen Bedingungen in der Umgebung der Ausbringungs- und/oder Auffangfläche berücksichtigen zu können, umfasst das erfindungsgemäße Wasserbilanzsteuerungssystem wenigstens einen Sensor zur Ermittlung einer Klimaeigenschaft. Dabei handelt es sich bevorzugt um einen Temperatursensor. Weitere Sensoren zur Messung der Luftfeuchtigkeit, der Bodenfeuchtigkeit, der Windgeschwindigkeit, des Luftdrucks, der Sonneneinstrahlung oder ähnlicher klimatischer Bedingungen, die für die Steuerung des erfindungsgemäßen Systems relevant sein könnten, können ebenfalls verwendet werden. Geeignete Sensoren sind im Stand der Technik bekannt und müssen daher hier nicht näher erläutert werden. Die Sensoren, die im System verwendet werden, stehen entweder über eine Kabelverbindung mit einer elektronischen Auswertungseinheit in Verbindung oder übermitteln die Messergebnisse drahtlos an diese. Die elektronische Auswertungseinheit ist ausgebildet, die von den Sensoren übermittelten Daten zu empfangen und an eine elektronische Steuervorrichtung zu übermitteln. Dies kann ebenfalls über eine kabelgebundene Verbindung oder drahtlos erfolgen. Im Falle einer drahtlosen Übertragung erfolgt diese bevorzugt per Mobilfunk, jedoch ist auch jede andere Art drahtloser Übertragung grundsätzlich denkbar.

Weiterhin umfasst das Wasserbilanzsteuerungssystem einen Sensor zur Ermittlung des Wasserstandes im Speicherraum. Setzt sich der Speicherraum aus mehreren Teilspeichern zusammen, ist zweckmäßig in jedem dieser Teilspeicher ein eigener Wasserstandssensor vorhanden. Bevorzugt handelt es sich dabei um einen Ultraschallsensor, wie er zum Messen des Wasserstandes in Wasserspeichern aus dem Stand der Technik bekannt ist. Wie im Falle der Klimasensoren erfolgt auch im Falle des Wasserstandsensors die Übertragung der ermittelten Messdaten an die elektronische Auswertungseinheit, und zwar erneut entweder kabelgebunden oder drahtlos.

Bei der elektronischen Auswertungseinheit kann es sich um jede aus dem Stand der Technik bekannte geeignete Auswertungseinheit wie insbesondere eine speicherprogrammierbare Steuereinheit handeln, die in der Lage ist, die von den Sensoren übertragenen Daten zu empfangen, zu verarbeiten und dann an die elektronische Steuervorrichtung des erfindungsgemäßen Wasserbilanzsteuerungssystems weiterzugeben. Zu diesem Zweck enthält die elektronische Auswertungseinheit Mittel zum Senden und Empfangen von Daten entweder per kabelgebundener und/oder drahtloser Übertragung. Geeignet ist beispielsweise eine Übertragung mittels LAN, WLAN, GSM oder LO-RA. Wie erwähnt, erfolgt die Datenübertragung bevorzugt per Mobilfunk nach einem der verfügbaren Mobilfunkstandards. Unter der Datenverarbeitung soll dabei bereits das Empfangen und Durchleiten der von den Sensoren ermittelten Daten verstanden werden. In einer Weiterbildung der Erfindung kann in der elektronischen Auswertungseinheit auch eine Speicherung und Auswertung der Sensordaten erfolgen, und diese ausgewerteten Ergebnisse werden dann zur Weiterverarbeitung an die elektronische Steuervorrichtung übermittelt. Alternativ können von der elektronischen Auswertungseinheit auch die unmittelbar von den Sensoren empfangenen Messergebnisse ohne weitere Auswertung an die elektronische Steuervorrichtung übertragen und dann von letzterer ausgewertet werden.

Die Auswahl der elektronischen Steuervorrichtung aus den aus dem Stand der Technik bekannten Steuervorrichtungen ist nicht weiter beschränkt. Grundsätzlich eignet sich jede elektronische Datenverarbeitungsanlage, die in der Lage ist, die von der elektronischen Auswertungseinheit übermittelten Daten zu empfangen und weiterzuverarbeiten. Geeignet sind beispielsweise Personalcomputer (PCs) oder Server. Die elektronische Steuervorrichtung enthält entsprechend geeignete Mittel, um Daten mit der elektronischen Auswertungseinheit auszutauschen. Dieser Austausch kann, wie bereits erwähnt, kabelgebunden oder drahtlos erfolgen. Dabei ist es grundsätzlich möglich, dass einer elektronischen Auswertungseinheit jeweils eine eigene elektronische Steuervorrichtung zugeordnet ist. Alternativ kann eine elektronische Steuervorrichtung die Steuerung mehrerer elektronischer Auswertungseinheiten übernehmen, wobei der Betreiber der elektronischen Steuervorrichtung nicht unbedingt identisch mit dem Besitzer der elektronischen Auswertungseinheit sein muss. Beispielsweise kann sich die elektronische Steuervorrichtung im Besitz eines externen Dienstleisters befinden, der die Steuerung eines Wasserbilanzsteuerungssystems übernimmt, welches auf dem Grundstück eines Grundbesitzers installiert ist.

In einer besonders bevorzugten Variante der Erfindung ist die elektronische Steuervorrichtung zudem ausgebildet, Wettervorhersagedaten in die Steuerung des Wasserbilanzsteuerungssystems einzubeziehen. Bei den Wettervorhersagedaten handelt es sich insbesondere um Daten, welche die zu erwartenden Niederschlagsmengen und/oder zu erwartenden Temperaturen und/oder zu erwartenden Windgeschwindigkeiten betreffen. Von besonderer Bedeutung sind die zu erwartenden Niederschlagsmengen, vor allem die Niederschlagsmengen für die Folgetage, beispielsweise die folgenden zwei Wochen, die Folgewoche und insbesondere die folgenden zwei oder drei Tage. Wie bereits in den Veröffentlichungen EP2982810 A1 und EP 3202995 A1 der Anmelderin beschrieben, können diese Daten dazu dienen, den für die Folgetage erforderlichen Speicherbedarf zu errechnen und, falls erforderlich, rechtzeitig durch Ablassen von Wasser aus dem zur Verfügung stehenden Speicherraum ausreichend Speicherkapazität für die zu erwartenden Niederschläge zu schaffen. Diese vorausschauende Steuerung kann im erfindungsgemäßen Verfahren zum Betrieb des Wasserbilanzsteuerungssystems ebenfalls Eingang finden. Berücksichtigt wird dabei der für die Auffangfläche des erfindungsgemäßen Systems zu erwartende Niederschlag. Entsprechend beziehen sich die Wettervorhersagedaten zweckmäßig auf Wetterdaten, welche sich auf den Standort der Auffangfläche oder Ausbringungsfläche oder dessen nähere Umgebung beziehen. Bezogen werden diese Prognosedaten bevorzugt von einem Wetterdienst (DWD, Wetter online oder Ähnliche), wo sie zweckmäßig von einem Server über einen kommerziellen Datenbankzugang ausgelesen werden. Alternativ, wenn auch weniger bevorzugt, kann eine Wettervorhersage-App eingesetzt werden, wie sie für Mobilfunkgeräte oder PCs von verschiedenen Anbietern bereitgestellt wird. Die Wettervorhersage-App kann dabei entweder in der elektronischen Auswertungseinheit und/oder der elektronischen Steuervorrichtung installiert sein. Die Installation auf beiden Geräten bietet den Vorteil, dass für den Fall eines schlechten oder unterbrochenen Empfangs für eines der Geräte eine Redundanz vorhanden ist.

Das erfindungsgemäße Verfahren zum Betrieb des Wasserbilanzsteuerungssystem, wie es vorstehend beschrieben wurde, umfasst die Schritte:

-    Ermitteln von Sensordaten mithilfe der Sensoren und Übertragung der Sensordaten an die elektronische Auswertungseinheit,
-    Auswertung der Sensordaten in der elektronischen Auswertungseinheit und Übermittlung der Auswertungsergebnisse an die elektronische Steuervorrichtung oder Übermittlung der Sensordaten an die elektronische Steuervorrichtung und Auswertung der Sensordaten in der elektronischen Steuervorrichtung unter Erzeugung von Auswertungsergebnissen,
-    Vergleichen der Auswertungsergebnisse mit in der elektronischen Steuervorrichtung hinterlegten Sollwerten,
-    Ermittlung von Steuerparametern in der elektronischen Steuervorrichtung auf der Basis des Vergleichs zwischen Auswertungsergebnissen und Sollwerten,
-    Übermittlung der Steuerparameter an die elektronische Auswertungseinheit und
-    Steuern des Mittels zum steuerbaren Fördern von Wasser sowie gegebenenfalls des Mittels zum steuerbaren Abführen von Wasser auf der Basis der übermittelten Steuerparameter.

Die Sollwerte, welche im erfindungsgemäßen Verfahren die Zielvorgaben darstellen, zu deren Erreichung das Mittel zum steuerbaren Fördern von Wasser und gegebenenfalls das Mittel zum steuerbaren Abführen von Wasser mit entsprechenden Steuerparametern betrieben wird, entsprechen der vorgegebenen Wasserbilanz, die mit dem konkreten Wasserbilanzsteuerungssystem erreicht werden soll. Wie bereits erwähnt, ist diese Wasserbilanz durch vorgegebene Anteile von Verdunstung und Abfluss für die auf der Auffangfläche während eines bestimmten Zeitraums niedergegangene Niederschlagsmenge gekennzeichnet. Entsprechend werden die Mittel zum Fördern bzw. Abführen von Wasser so betrieben, dass der auf der Auffangfläche gesammelte und dem Speicherraum zugeleitete Niederschlag so weiter gefördert und aufgeteilt wird, dass der vorgegebene Anteil durch Ausbringung auf die Ausbringungsfläche der Verdunstung zugeführt wird, während der restliche Anteil, sofern er größer als 0 festgesetzt ist, dem Abfluss zugeführt wird. Der Abflussanteil kann sich dabei, wie vorstehend bereits erwähnt, in Versickerung und direkten Abfluss aufteilen.

Der Begriff "Wasserbilanz", wie er im Rahmen der Erfindung verwendet wird, ist nicht so zu verstehen, dass die auf der Auffangfläche im vorgegebenen Zeitraum niedergegangene Niederschlagsmenge in einem geschlossenen System geführt würde, in dem die Niederschlagsmenge immer 100 % beträgt. Wie eingangs erwähnt, umfasst die Verdunstung Anteile von Evaporation und Transpiration sowie Interzeptionsverluste. Die Verdunstungsverluste führen, wie in einer natürlichen Wasserbilanz auch, dazu, dass der auf der Auffangfläche niedergegangene Niederschlag nicht zu 100 % im Kreis geführt werden kann. Natürliche Wasserbilanzen versiegelter oder teilversiegelter Flächen besitzen üblicherweise einen oberflächenabhängigen Verdunstungsgrundumsatz von etwa 10 bis 20 %. In dieser Größenordnung oder etwas darüber liegen auch die Verdunstungsverluste im Falle des erfindungsgemäßen Wasserbilanzsteuerungssystems. Ziel der Erfindung ist also nicht, einen zu 100 % geschlossenen und verlustfreien Wasserkreislauf zu realisieren, sondern vielmehr, eine vorgegebene Aufteilung des auf die Auffangfläche niedergegangenen und in dem Speicherraum des Systems aufgefangenen Niederschlags in Verdunstung und Abfluss zu erreichen. Dabei ist es insbesondere bevorzugt, den Anteil des Abflusses möglichst klein zu halten, beispielsweise zu dem Zweck, die Kanalisation zu entlasten. Ein weiteres bevorzugtes Ziel ist es, eine natürliche Wasserbilanz nachzuahmen und dabei besonders bevorzugt das Wasserbilanzsteuerungssystem an seine natürliche Umgebung anzupassen. Von besonderem Vorteil kann das Wasserbilanzsteuerungssystem dann so betrieben werden, dass eine zusätzliche Bewässerung der Vegetation mit Leitungswasser nicht mehr oder nur noch in Ausnahmefällen erforderlich ist.

Um diese Vorgaben für ein konkretes Wasserbilanzsteuerungssystem realisieren zu können, wird zunächst für das konkrete Objekt unter Einbeziehung von Größe und Art der Auffangfläche und der zur Verfügung stehenden Speicherräume eine Computersimulation zur Bestimmung einer durchschnittlichen Wasserbilanz durchgeführt. Wie eingangs beschrieben, gilt für eine natürliche Wasserbilanz Formel 1, und wenn der betrachtete Zeitraum lang ist, die vereinfachte Formel 2. In anderer Darstellung gilt für den Zeitraum t:

$$\int N\,dt = \int v\,dt + \int g\,dt + \int da\,dt + \Delta S \qquad\qquad \text{(Formel 1)}$$

worin N der Niederschlag auf der Auffangfläche, v die Verdunstung, g die Versickerung und da der direkte Abfluss, jeweils in l/s, ist. Der Gesamtabfluss a ergibt sich aus g + da. $\Delta S$ steht für die Speicheränderung, die für einen langen Betrachtungszeitraum t vernachlässigt werden kann.

Für die Berechnung der Formel 1 kann wie folgt vorgegangen werden:

Als klimatologische Eingangsdaten werden die Wetterdaten zurückliegender Zeiträume von einer in der Nähe des Objekts befindlichen Wetterstation verwendet.

Von einer Fläche stellt sich ein Abfluss ein, wenn die Speicherräume der Fläche gefüllt sind. Da Abflüsse einer Fläche unter Umständen anderen Flächen zufließen, müssen diese Flächen im Simulationsmodell entsprechend vernetzt werden, um die Zu- und Abflüsse berücksichtigen zu können. Wie dies im Einzelnen geschehen kann, ist dem Fachmann bekannt und kann beispielsweise bei Rossman nachgelesen werden (Rossman, L. A. (2010) Storm Water Management Model User's Manual Version 5.0. US EPA - United States Environmental Protection Agency, 285, Cincinnati, OH, USA).

Die Versickerung bzw. Grundwasserneubildung kann mit einem Infiltrationsansatz oder entsprechend den Ansätzen von Horton oder Green-Ampt berücksichtigt werden (Rossman, ibid.).

Die Verdunstung ist für versiegelte Flächen mit dem Speicherraum der versiegelten Fläche identisch. Für teilversiegelte oder Grünflächen wird die Verdunstung mit ihren einzelnen Bestandteilen Evaporation, Transpiration und Interzeption berücksichtigt. Eine Berechnung ist mithilfe der Gleichung von Penman-Montheith (Allen, R., Pereira, L., Raes, D. & Smith, M. (1998). Crop Evapotranspiration: Guidelines for computing crop water requirements. Irrigation and Drainage Paper (56)) unter Berücksichtigung der wirkenden Bodenprozesse möglich (Simunek, J., Sejna, M., Saito, H., Sakai, M., & van Genuchten, M. (2013). The HYDRUS-1D Software Package for Simulating the One-Dimensional Movement of Water, Heat and Multiple Solutes in Variably-Satured Media. Version 4.17. (U. o. Department of Environmental Sciences, Hrsg.) California).

Für die Transpiration gilt:

$$ETrad + ETaero = 1/\lambda \left[ \frac{\Delta(Rn - G)}{\Delta + \gamma(1 + rc/ra)} + \frac{pcp(es - ea)/ra}{\Delta + \gamma(1 + rc/ra)} \right] \qquad \text{(Formel 3)}$$

für die Interzeption:

$$Ep = 1/\lambda \left[ \frac{\Delta(Rn - G)}{\Delta + \gamma} + \frac{pcp(es - ea)/ra}{\Delta + \gamma} \right] \qquad \text{(Formel 4)}$$

jeweils mit

ETp        Evapotranspirationsrate [mm/Zeit]

ETrad    Strahlungsanteil Evapotranspiration [mm/Zeit]

ETaero    aerodynamischer Anteil Evapotranspiration [mm/Zeit]

$\lambda$    latente Verdunstungswärme [MJ/kg]

Rn    Nettostrahlung an der Oberfläche [MJ/m$^2$ d]

G    Bodenwärmestrom [MJ/m$^2$ d]

p    atmosphärische Dichte [kg m$^3$]

cp    spezifische Wärmekapazität trockener Luft [kJ/kg °C]

es    Sättigungsdampfdruck bei einer Temperatur T [kPa]

(es-ea)    Dampfdruckdefizit [kPa]

rc    Stomatawiderstand [s/m]

ra    aerodynamischer Widerstand [s/m]

$\Delta$    Steigung der Sättigungsdampfdruck-Temperatur-Kurve [kPa/°C]

$\gamma$    psychrometrische Konstante [kPa/°C]

Für die Evaporation von reinem Substrat gilt nach Camillo, P. Gurney, R.J. (1986), a resistance parameter for bare-soil evaporation models. Soil Sciences (141), 742-744,

$$E = \frac{\rho s - \rho a}{\Upsilon a + \Upsilon s}$$    (Formel 5)

mit

$\rho s$    Wasserdampfdichte an der Substratoberfläche [kg/m$^3$]

$\rho a$    Wasserdampfdichte der Atmosphäre [kg/m$^3$]

$\Upsilon s$    Bodenoberflächenwiderstand [s/m]

$\Upsilon a$    aerodynamischer Bodenoberflächenwiderstand [s/m]

Die wirksamen Bodenprozesse können wie folgt berücksichtigt werden:

$$\frac{\partial \theta_T(h)}{\partial t} = \frac{\partial}{\partial x}\left[(K + K_{vh})\left(\frac{\partial h}{\partial x} + \cos \alpha\right) + (K_{LT} + K_{vT})\frac{\partial T}{\partial x}\right] - S$$    (Formel 6)

mit

$\theta T$    gesamter volumetrischer Wassergehalt [m$^3$m$^{-3}$]
T    Temperatur [K]
K    isothermische Leitfähigkeit der flüssigen Phase [m/s]
$K_{LT}$    thermisch hydraulische Leitfähigkeit der flüssigen Phase [m$^2$/K s]
$K_{vh}$    isothermische Dampfleitfähigkeit [m/s]
$K_{vT}$    thermisch hydraulische Dampfleitfähigkeit [m$^2$/K s]

(fortgesetzt)

| | |
|---|---|
| h | negatives Matrixpotential [m] |
| t | Zeit [s] |
| $\alpha$ | Winkel zwischen Fließrichtung und vertikaler Achse [°] |
| S | Sinkterm $[m^3 m^{-3}]$ |

und

$$C_p(\theta)\frac{\partial T}{\partial t} + L_0\frac{\partial \theta_v}{\partial t} = \frac{\partial}{\partial x}\left(\lambda(\theta)\frac{\partial T}{\partial x}\right) - C_w q\frac{\partial T}{\partial x} - C_v\frac{\partial q_v T}{\partial x} - L_0\frac{\partial q_v}{\partial x} \qquad \text{(Formel 7)}$$

mit

$\lambda(\theta)$      Koeffizient der thermischen Leitfähigkeit des Bodens [W/m K]

$C_p(\theta)$      volumetrische Wärmekapazität poröses Medium $[J/m^3\ K]$

$C_w$      volumetrische Wärmekapazität flüssige Phase $[J/m^3\ K]$

$L_0$      volumetrische latente Verdunstungswärme von Wasser $[J/m^3]$

$q_v$      Dampfstrom [m/s]

Auf der Grundlage der vorstehenden Formeln wird für die Auffangfläche des geplanten Wasserbilanzsteuerungssystems für den vorgegebenen Zeitraum, also beispielsweise ein Jahr, für jeden einzelnen Parameter der Wasserbilanz ein durchschnittlicher Wert berechnet. Die für die einzelnen Parameter errechneten Werte werden dann zu einer Gesamtbilanz zusammengeführt, welche eine mittlere Wasserbilanz im vorgegebenen Zeitraum, also beispielsweise eine mittlere Jahresbilanz, für die Auffangfläche darstellen. Diese mittlere Jahresbilanz kann zur Kontrolle mit der DWA-A 102 (derzeit gültige Fassung von 2015 bzw. deren Neufassung im Entwurfsstadium) abgeglichen werden. Ist die simulierte mittlere Wasserbilanz realistisch, sollte sich eine hohe Übereinstimmung mit der DWA-A 102 ergeben. Setzt sich die Auffangfläche des Wasserbilanzsteuerungssystem aus mehreren Teilflächen zusammen, erfolgt die Berechnung für jede der Teilflächen separat, und die Einzelergebnisse werden dann zu der Gesamtbilanz zusammengeführt.

Die errechnete mittlere Wasserbilanz stellt die geschätzte Wasserbilanz des Objekts mit Durchschnittswerten für Niederschlag, Verdunstung (aufgeteilt auf die einzelnen Anteile) und Abfluss (aufgeteilt in Versickerung (Grundwasserneubildung) und direkten Abfluss) im vorgegebenen Zeitraum ohne Steuerungseinflüsse dar. Ausgehend von diesem Ergebnis wird in einem weiteren Schritt die Ziel-Wasserbilanz für das Objekt im vorgegebenen Zeitraum festgelegt. Die Ziel-Wasserbilanz sollte selbstverständlich nicht so stark von der geschätzten Wasserbilanz abweichen, dass sie unter Einsatz der zur Verfügung stehenden Stellmöglichkeiten nicht realisiert werden kann. Die zur Verfügung stehenden Stellmöglichkeiten werden als Rechengrößen dem Simulationsmodell hinzugefügt, sodass durch entsprechende Berechnung festgestellt werden kann, in welchem Rahmen sich Änderungen der Wasserbilanz realisieren lassen. Nach Festlegung einer realistischen Ziel-Wasserbilanz kann letztere dann im realen Betrieb durch Berechnung der Stellgrößen und Übermittlung der errechneten Steuerparameter durch die elektronische Steuervorrichtung an das Mittel zum steuerbaren Fördern von Wasser und gegebenenfalls das Mittel zum steuerbaren Abführen des Wassers realisiert werden.

Zur Bestimmung der Wasserbilanz im vorgegebenen Zeitraum im realen Betrieb werden die auf die Auffangfläche fallenden Niederschläge bilanziert, und das Ergebnis wird in einer Datenbank der elektronischen Steuervorrichtung abgespeichert. Handelt es sich bei der Auffangfläche um mehrere Teilflächen, erfolgt die Bilanzierung für jede der Flächen gesondert, und das Ergebnis wird durch rechnerische Verknüpfung zu einer Gesamtwasserbilanz zusammengefasst. Nachfolgend wird zur Vereinfachung von einer einzigen Auffangfläche ausgegangen. Die Bilanzierung der Niederschlagsmenge erfolgt erneut in Anlehnung an Formel 1 oder, bei Vernachlässigung der Speicheränderung $\Delta S$, an Formel 2. Das nachfolgende Beispiel berücksichtigt die Speicheränderung. Die Bilanzierungsformel lautet dann:

$$\int N\ dt = \int v\ dt + \int g\ dt + \int s\ dt + \Delta B \qquad \text{(Formel 8)}$$

worin N der Niederschlag auf der Auffangfläche, v die Verdunstung, g die Versickerung und *s* der Speicherraumzufluss, jeweils in l/s, ist. ΔB stellt die Bodenspeicheränderung in l dar und entspricht der Speicheränderung in Formel 1, wurde zur besseren Unterscheidbarkeit vom Speicherraumzufluss s nun aber als ΔB bezeichnet.

N wird entweder aus Wettervorhersagedaten oder von einem Regenmessgerät am Ort des Objekts bezogen. ΔB wird mittels eines Bodenfeuchtesensors ermittelt und auf diesen Wert kalibriert. g kann unberücksichtigt bleiben, wenn sämtlicher auf der Auffangfläche niedergehende Niederschlag dem Speicherraum zugeführt wird. Handelt es sich bei der Auffangfläche aber um eine nur teilweise versiegelte Fläche, von der ein Teil des Niederschlags versickern kann, muss dieser versickernde Anteil in der Niederschlagsbilanz berücksichtigt werden. Der Anteil an Versickerung wird durch Vorabberechnung im Simulationsmodell unter Heranziehung der vorstehend beschriebenen Formeln bestimmt und während des realen Betriebs von der ermittelten Niederschlagsmenge abgezogen, da er nicht in den Speicherraum gelangt. Die Berechnung nach Formel 8 liefert also für den in einem bestimmten Zeitintervall auf die Auffangfläche niedergehenden Niederschlag die Niederschlagsmenge, welche dem Speicherraum zufließt. Dieser Speicherraumzufluss stellt das Wasservolumen dar, welches zur Erzielung der vorgegebenen Wasserbilanz gesteuert Verdunstung v und Abfluss a (gegebenenfalls aufgeteilt in Versickerung g und direkten Abfluss da) zugeführt werden kann.

Für den Speicherraum, dem der Niederschlag ($\int s$, in l) zufließt, gilt:

$$V_{Ret} = V_{Ret_l} + V_{Ret_a} \qquad \text{(Formel 9)}$$

wobei $V_{Ret}$ das Gesamt-Retentionsvolumen des Speicherraums in l darstellt, welches sich aufteilt in das zum aktuellen Zeitpunkt von zugeflossenem Niederschlag gefüllte Retentionsvolumen $V_{Ret_a}$ sowie das nicht gefüllte restliche Volumen des Speicherraums $V_{Ret_l}$.

Für das im Speicherraum zum aktuellen Zeitpunkt für die Aufnahme von Niederschlag zur Verfügung stehende Volumen ergibt sich:

$$V_{Ret_l} = V_{Ret} - V_{Ret_a} \qquad \text{(Formel 10)}$$

Ein Auslöser für die Entnahme von Niederschlag aus dem Speicherraum können beispielsweise Wettervorhersagedaten sein. Ergibt sich, dass Niederschlag zu erwarten ist und das zur Verfügung stehende Retentionsvolumen $V_{Ret_l}$ zur Aufnahme dieses Niederschlages voraussichtlich nicht ausreichen wird, wird erfindungsgemäß Speicherraum freigegeben, indem Niederschlag aus dem Speicherraum entnommen wird, bis wieder ausreichend leeres Retentionsvolumen zur Verfügung steht. Zusätzlich oder alternativ können beispielsweise auch bestimmte vom System ermittelte Messergebnisse eine Entnahme und Aufteilung von Niederschlag aus dem Speicherraum auslösen, zum Beispiel bestimmte Temperatur- und/oder Bodenfeuchte-Messwerte. Die Aufteilung des entnommenen Niederschlages erfolgt dabei entsprechend der für das System vorgegebenen Wasserbilanz. Für das aktuelle Retentionsvolumen $V_{Ret_a}$ ergibt sich somit:

$$V_{Ret_a} = \int s\, dt - \int v_g\, dt - \int g_g\, dt - \int da_g\, dt - \Delta S \qquad \text{(Formel 11)}$$

Das dem Speicherraum entnommene Niederschlagsvolumen wird also, wie vorstehend bereits beschrieben, entsprechend der vorgegebenen Wasserbilanz in Anteile von Verdunstung v, Versickerung g sowie direkten Abfluss da aufgeteilt. Durch den jeweiligen Index g soll die gesteuerte, aktiv herbeigeführte Entnahme und Aufteilung des Niederschlags kenntlich gemacht werden. Formel 11 berücksichtigt hier die Speicheränderung ΔS, die gegebenenfalls aber auch vernachlässigt werden kann.

Die Zielwerte der Aufteilung sind diejenigen, welche aus für die Vergangenheit bekannten Werten in dem Simulationsmodell abgeleitet wurden, wie zuvor beschrieben. Die Zielwerte, welche nachfolgend mit dem Index *p* gekennzeichnet sind, können entweder als absolute Werte eines Zeitintervalls oder als relativer Anteil eines Zeitintervalls festgelegt werden:

Absoluter Wert eines Zeitintervalls:

$$V_p = \int_{i_a}^{i_e} v_p \qquad \text{(Formel 12)}$$

Relativer Wert eines Zeitintervalls: mit

$$V_{p,i_a-i_e} = \int_{i_a}^{i_e} \frac{v_p}{N_p} \qquad \text{(Formel 13)}$$

i vergangene Zeit im Zeitraum parallel zum vorgegebenen Zeitraum t [s]
$i_a$ Anfang des Bezugsintervalls der Vergangenheit zur Zielgröße [s]
$i_e$ Ende des Bezugsintervalls der Vergangenheit zur Zielgröße [s]
p Index für einen Zielwert

In den Beispielen der Formeln 12 und 13 ist als Zielgröße das Volumen des Verdunstungsanteils v gewählt. In Formel 12 wird dabei für den vorgegebenen Zeitraum t einmalig die in Zukunft einzuhaltende Zielgröße anhand des für einen gleichartigen Zeitraum in der Vergangenheit (zwischen den Grenzwerten $i_a$ und $i_e$) ermittelten Zielwerts festgesetzt. In ähnlicher Weise wird auch der relative Wert unter Heranziehung aus der Vergangenheit bekannter Werte festgesetzt, wobei der Zielwert nun aber nicht ein absoluter Wert, sondern ein auf den Niederschlag bezogener Relativwert ist. In analoger Weise wie die Werte für den Verdunstungsanteil ergeben sich die Anteile für die Versickerung und den direkten Abfluss.

Die Algorithmen, anhand derer während des Betriebs des Wasserbilanzsteuerungssystem in der elektronischen Steuerungsvorrichtung die Verwendung des im Speicherraum gespeicherten Niederschlages berechnet wird, können folgendermaßen wiedergegeben werden:

Variante 1 - die Zielgröße ist absolut:

$$\partial V_{Ret} = \partial v \quad \left( \int_{i_a}^{i_e} v_p - \int_{t_a}^{t} v\, dt - \int_{i}^{i_e} v_v\, dt \right) > 0 \qquad \text{(Formel 14)}$$

$$\partial V_{Ret} = \partial g \quad \left( \int_{i_a}^{i_e} v_p - \int_{t_a}^{t} v\, dt - \int_{i}^{i_e} v_v\, dt \right) > 0 \wedge \left( \int_{i_a}^{i_e} g_p - \int_{t_a}^{t} g\, dt - \int_{i}^{i_e} g_v\, dt \right) > 0 \quad \text{(Formel 15)}$$

$$\partial V_{Ret} = \partial da \quad \left( \int_{i_a}^{i_e} v_p - \int_{t_a}^{t} v\, dt - \int_{i}^{i_e} v_v\, dt \right) > 0 \wedge \left( \int_{i_a}^{i_e} g_p - \int_{t_a}^{t} g\, dt - \int_{i}^{i_e} g_v\, dt \right) > 0$$

$$\wedge \left( \int_{i_a}^{i_e} da_p - \int_{t_a}^{t} da\, dt - \int_{i}^{i_e} da_v\, dt \right) > 0 \qquad \text{(Formel 16)}$$

Variante 2 - die Zielgröße ist relativ:

$$\partial V_{Ret} = \partial v \quad \left( V_{p,i_a-i_e} \int_{t_a}^{t_e} N - \int_{t_a}^{t} v\, dt - \int_{i}^{i_e} v_v\, dt \right) > 0 \qquad \text{(Formel 17)}$$

$$\partial V_{Rot} \quad = \quad \partial g \quad \left( V_{p.t_a-t_e} \int_{t_a}^{t_e} N - \int_{t_a}^{t} v \, dt - \int_{t}^{t_e} v_v \, dt \right) > 0 \qquad \text{(Formel 18)}$$

$$\wedge \left( G_{p.t_a-t_e} \int_{t_a}^{t_e} N - \int_{t_a}^{t} g \, dt - \int_{t}^{t_e} g_v \, dt \right) > 0$$

$$\partial V_{Rot} \quad = \quad \partial da \quad \left( V_{p.t_a-t_e} \int_{t_a}^{t_e} N - \int_{t_a}^{t} v \, dt - \int_{t}^{t_e} v_v \, dt \right) > 0 \qquad \text{(Formel 19)}$$

$$\wedge \left( G_{p.t_a-t_e} \int_{t_a}^{t_e} N - \int_{t_a}^{t} g \, dt - \int_{t}^{t_e} g_v \, dt \right) > 0$$

$$\wedge \left( DA_{p.t_a-t_e} \int_{t_a}^{t_e} N - \int_{t_a}^{t} da \, dt - \int_{t}^{t_e} da_v \, dt \right) > 0$$

mit

$t$    aktuelle Zeit [s]

$t_a$    Anfang des Bezugsintervalls der aktuellen Zeit zur Zielgröße [s]

$t_e$    Ende des Bezugsintervalls der aktuellen Zeit zur Zielgröße [s]

Die übrigen Parameter sind wie in Formeln 12 und 13 definiert.

Die vorstehenden Formen 14 bis 19 ergeben den zu einem bestimmten Zeitpunkt während des Betriebs des Wasserbilanzsteuerungssystems zu fördernden Volumenanteil für Verdunstung, Versickerung und direkten Abfluss. Für die praktische Handhabung werden diese Volumenanteile jeweils in korrespondierende Steuerparameter umgerechnet, welche die elektronische Steuervorrichtung dann an das Mittel zum steuerbaren Fördern von Wasser (für die Verdunstung), das Mittel zum steuerbaren Abführen von Wasser (für die Versickerung) und ein weiteres Mittel zum steuerbaren Abführen von Wasser (für den direkten Abfluss) übermittelt. Da die Förderleistung der jeweiligen Mittel pro Zeiteinheit bekannt ist, bestehen die Steuerparameter zweckmäßig jeweils in einer Zeitdauer, während derer das Mittel betrieben wird. Konkret übermittelt die elektronische Steuervorrichtung an die elektronische Auswertungseinheit beispielsweise eine Zeitdauer für den Betrieb des Mittels zum steuerbaren Fördern von Wasser. Die elektronische Auswertungseinheit schaltet für diese Zeitdauer ein dem Fördermittel zugeordnetes Relay frei, sodass das Mittel für die vorgegebene Zeitdauer mit Strom versorgt wird und in dieser Zeit mit der bekannten Förderleistung Wasser für die Verdunstung zur Auffangfläche fördert. Nach Ablauf der Zeitdauer wird das Relay gesperrt und die Stromversorgung zum Fördermittel unterbrochen, sodass die Zufuhr von Wasser zur Auffangfläche nach der Förderung des berechneten Volumens so lange beendet wird, bis ein nachfolgender Rechenzyklus einen weiteren Fördervorgang errechnet hat. Alternativ kann die zu fördernde Wassermenge zum Beispiel auch über die Bestimmung der Wasserstandsänderung im Speicherraum oder mittels eines Durchflussmessers ermittelt werden.

Um den Rechenaufwand dabei nicht übermäßig groß werden zu lassen, ist es bevorzugt, Rechenzyklen in vorgegebenen Zeitabständen durchzuführen. Zusätzlich oder alternativ ist es auch möglich, die Durchführung eines Rechenzyklus von bestimmten Ereignissen abhängig zu machen. Bei diesen Ereignissen kann es sich beispielsweise um von den Sensoren festgestellte Änderungen der klimatischen Bedingungen, der Bodenfeuchte und/oder Änderungen des Füllstandes in einem der Wasserspeicher handeln. Außerdem kann der Empfang bestimmter Wetterprognosedaten den Anlass liefern, einen Rechenzyklus zu starten und entsprechende Fördervorgänge zur Verteilung des im Speicherraum gespeicherten Niederschlages auszulösen.

Eine zusätzliche oder alternative Möglichkeit besteht darin, in Abhängigkeit von bestimmten Sensormeldungen und/oder Wetterprognosedaten Fördervorgänge mit Fördervolumina auszulösen, die nicht entsprechend den vorstehenden Algorithmen berechnet wurden. Dies kann beispielsweise dann der Fall sein, wenn damit zu rechnen ist, dass die Speicherkapazität des Speicherraumes zur Aufnahme von zu erwartenden Niederschlägen nicht mehr ausreichen wird. Es handelt sich also zum Beispiel um einen Fall, wie er in den Veröffentlichungen EP2982810 A1 und EP 3202995 A1 der Anmelderin beschrieben ist. Das erfindungsgemäße Verfahren zum Betrieb des Wasserbilanzsteuerungssystems reagiert auf einen derartigen Warnhinweis bevorzugt damit, dass der reguläre Betrieb unterbrochen wird, um in einen Sonderbetriebsmodus zu wechseln. In diesem übermittelt die elektronische Steuervorrichtung dem Mittel zum steuerbaren Abführen von Wasser über die Abflussleitung den Befehl, Wasser so lange dem Abfluss zuzuführen, bis im Speicherraum wieder ausreichend Aufnahmevolumen vorhanden ist, um die erwarteten Niederschlagsmengen aufnehmen zu können. Als Steuerparameter dient zweckmäßig erneut die Zeitdauer des Betriebs, während der das Mittel, also konkret beispielsweise eine Pumpe, betrieben wird. Konkret stellt sich der Steuermechanismus im Sonderbetriebsmodus wie folgt dar:

$$\int s\ dt > V_{Ret,l} \qquad\qquad \text{(Formel 20)}$$

$$\int s\ dt\ -\ V_{Ret,l} = x \int da\ dt + (1-x)\int g\ dt \qquad\qquad \text{(Formel 21)}$$

Ergibt sich entsprechend Formel 20, dass die zu erwartende Niederschlagsmenge das zur Verfügung stehende Volumen im Speicherraum überschreitet, wird von der elektronischen Steuervorrichtung ein Ablassbefehl erteilt, durch den im Speicherraum gespeichertes Wasser entsprechend Formel 21 aus dem Speicherraum abgelassen und dabei auf Versickerung und direkten Ablass verteilt wird. x bezeichnet dabei den Aufteilungsfaktor, nach dem die Verteilung erfolgt. Die Aufteilung zwischen Versickerung und direktem Abflusses entspricht bevorzugt derjenigen, die durch die gewünschte Wasserbilanz vorgegeben ist. Vorrangig ist jedoch, dass ein Überlaufen des Speicherraums infolge der starken Niederschläge vermieden wird. Den zur Verfügung stehenden Speicherraum ermittelt die elektronische Steuerungsvorrichtung unter Verwendung der vom Wasserstandsensor via elektronische Auswertungseinheit empfangenen Daten. Werden beispielsweise in sehr naher Zukunft sehr starke Niederschläge erwartet und ist der Versickerungsspeicher nicht groß genug, um den der Wasserbilanz entsprechenden Anteil davon aufzunehmen und in kurzer Zeit zu versickern, kann es erforderlich sein, dem direkten Abfluss einen größeren als der Wasserbilanz entsprechenden Anteil zuzuweisen. Weitere Faktoren, die bei der Verteilung der starken Regenfälle zu berücksichtigen ist, sind die Förderleistung der Fördermittel (in der Regel Pumpen), mit denen der Niederschlag der Versickerung oder dem direkten Abfluss zugeführt wird, und die Zeit, innerhalb derer zusätzliches Leervolumen im Speicherraum geschaffen werden muss. Da die Fördermittel nur eine ihrer maximalen Förderleistung entsprechende Niederschlagsmenge fördern können, kann dies ebenfalls Auswirkungen auf die Aufteilung zwischen Versickerung und Abfluss haben. Die dadurch eintretende Verschiebung der Anteile von Versickerung und direktem Abfluss im Sonderbetriebsmodus kann zu einem späteren Zeitpunkt durch entsprechende Gegensteuerung wieder korrigiert werden.

Das erfindungsgemäße Verfahren kann über die gesamte vorgegebene Zeitdauer mit gleich bleibenden Zielwerten betrieben werden. Da sich die vorgegebene Zeitdauer jedoch in der Regel auf eine längere Zeit von vorzugsweise mehreren Monaten und insbesondere einem Jahr bezieht, treten während dieses Zeitraums üblicherweise Änderungen der klimatischen Bedingungen auf. So gibt es beispielsweise in Deutschland im Sommer die meisten Niederschläge bei gleichzeitig erhöhten Temperaturen. Diese Bedingungen ermöglichen es, einen hohen Anteil an Verdunstung für die aufgefangenen Niederschläge zu erreichen, während dies im Winter bei geringeren Niederschlägen und deutlich niedrigeren Temperaturen erheblich schwieriger ist. Es bietet sich daher an, die Sollwerte (die Aufteilung von Verdunstung und Abfluss) den sich ändernden klimatischen Bedingungen über den Betrachtungszeitraum anzupassen. Im konkreten Beispiel kann im Sommer der Anteil der Verdunstung erhöht werden, während im Winter der Anteil an Verdunstung vergleichsweise gering ist. Im Frühling und Herbst können die Anteile von Verdunstung und Abfluss den dort zu erwartenden Temperaturen und Niederschlagsmengen entsprechend angepasst werden. Die Aufteilung in den einzelnen Zeitabschnitten wird dabei so gewählt, dass sich über den gesamten Zeitraum, hier also ein Jahr, im Endergebnis die gewünschte Wasserbilanz einstellt.

Allgemein gesprochen, wird also der beobachtete Zeitraum t in mehrere Teilzeiträume t1, t2, t3 ... aufgeteilt, denen jeweils eigene Sollwerte zugeordnet sind. Bevorzugt werden die Teilzeiträume so gewählt, dass in ihnen jeweils ähnliche klimatische Bedingungen vorherrschen. Für den Gesamtzeitraum eines Jahres bieten sich beispielsweise die Jahreszeiten Frühling, Sommer, Herbst und Winter als Teilzeiträume an. Für jeden der Teilzeiträume wird eine eigene Aufteilung der Niederschlagsanteile in Verdunstung und Abfluss festgelegt, wobei der Abfluss bevorzugt wiederum in Versickerung und direkten Abfluss aufgeteilt ist. In jedem der Teilzeiträume steuert die elektronische Steuerungsvorrichtung die Mittel zum Fördern des Wassers und zum Abführen des Wassers entsprechend den für den jeweiligen Teilzeitraum festgelegten Sollwerten. Die dabei erzielten Teil-Wasserbilanzen können und werden üblicherweise von der für den Gesamtzeitraum festgelegten Wasserbilanz abweichen. Zusammengenommen über den Gesamtzeitraum ergeben die Teil-Wasserbilanzen dann jedoch die gewünschte Gesamt-Wasserbilanz, also eine Aufteilung des auf der Auffangfläche niedergegangenen Niederschlags in bestimmte Anteile von Verdunstung und Abfluss. Dabei ist es nicht unbedingt erforderlich, dass die Wasserbilanz und/oder die Teil-Wasserbilanzen ganz exakt eingehalten werden. Trotz genauer Wetterbeobachtungen und der Berücksichtigung auch langer Vergangenheitszeiträume im Simulationsmodell für die Definition der Wasserbilanz, wie vorstehend beschrieben, wird es immer wieder vorkommen, dass das aktuelle Wetter deutlich von den Erwartungen abweicht. Dies kann dann dazu führen, dass zumindest temporär die vorgegebenen Sollwerte nicht eingehalten werden können. Durch Vorgabe bestimmter zulässiger Abweichungsmargen kann diesen natürlichen Schwankungen Rechnung getragen werden. Abweichungsmargen werden bevorzugt für jeden einzelnen Sollwert (Verdunstung, Versickerung, direkter Abfluss) in jedem der Teilzeiträume festgelegt. Vorzugsweise wird die elektronische Steuervorrichtung jedoch so programmiert, dass nicht korrigierte Abweichungen von den Sollwerten, mit oder ohne Berücksichtigung der Abweichungsmargen, aus früheren Teilzeiträumen in die Steuerung der nachfolgenden Teilzeiträume einbezogen werden. Konnte beispielsweise in einem vorangegangenen Teilzeitraum der Anteil an Verdunstung nicht erreicht werden, wird für den folgenden Teilzeitraum der Sollwert für die Verdunstung entsprechend nach oben korrigiert, um nach Möglichkeit den Rückstand auszugleichen. Analog wird bei Abweichungen von den anderen Sollwerten vorgegangen.

Wie bereits am Beispiel zu erwartender Starkregenfälle beschrieben, dienen in einer bevorzugten Verfahrensvariante Wettervorhersagedaten, die entweder Daten einer Wetterstation in der Nähe des Wasserbilanzsteuerungssystems oder ähnliche auf den Standort des Systems bezogene Wetterprognosedaten sind, zu einer Anpassung des Betriebs des erfindungsgemäßen Systems an die vorgefundenen oder zu erwartenden klimatischen Bedingungen. In die Anpassung werden zweckmäßig insbesondere auch die Sensordaten einbezogen, welche die Steuervorrichtung von den Sensoren des Systems über die elektronische Auswertungseinheit erhält. Beispielsweise können die von einem Bodenfeuchtesensor empfangenen Daten ausgewertet werden, um im Falle einer zu großen und/oder zu lange andauernden Trockenheit einen zusätzlichen Bewässerungsvorgang auszulösen. Dazu sendet die elektronische Steuervorrichtung an das Mittel zum Fördern von Wasser einen Steuerbefehl, der das Mittel veranlasst, Wasser aus dem Speicherraum zu der Ausbringungsfläche (oder zumindest der begrünten Teilfläche) zu fördern. Gegebenenfalls kann zusätzlich ein Steuerbefehl an das Mittel zum Abführen von Wasser gesendet werden, um einen der vorgegebenen Wasserbilanz entsprechenden Anteil der Niederschlagsmenge dem Abfluss (Versickerungsspeicher und gegebenenfalls direktem Abfluss) zuzuführen. In diesem Fall führt die außerplanmäßige Bewässerung nicht allein zu einem erhöhten Verdunstungsanteil, sondern die Wasserbilanz bleibt im vorgegebenen Soll.

In ähnlicher Weise können Daten eines Temperatursensors und/oder eines Solarstrahlungssensors und/oder eines Niederschlagsmessers verarbeitet werden, beispielsweise indem bei hoher Temperatur und Sonneneinstrahlung und/oder geringem Niederschlag ein zusätzlicher Bewässerungsvorgang gestartet wird. Ist ohnehin bereits eine Speicherentnahme vorgesehen, kann auf der Basis der Sensordaten gegebenenfalls eine Korrektur der entnommenen Wassermenge und/oder von deren Aufteilung auf Verdunstung und Abfluss vorgenommen werden. Die elektronische Steuervorrichtung sendet dann entsprechend den rechnerisch ermittelten korrigierten Werten geänderte Steuerparameter an die Mittel zum Fördern und Abführen von Wasser. Zeiten, in denen hohe Temperaturen herrschen, können außerdem dazu verwendet werden, den Anteil der Verdunstung in der gewünschten Wasserbilanz zu erhöhen. Befindet sich zum aktuellen Zeitpunkt der Anteil der Verdunstung unter dem festgesetzten soll der Wasserbilanz, kann das verstärkte Ausbringen von Niederschlag in Zeiten hoher Temperatur dazu verwendet werden, den Verdunstungsanteil wieder auf das gewünschte Soll zu bringen. Weiterhin können die von den Sensoren erfassten Daten, insbesondere die Temperatur- und/oder Bodenfeuchtedaten, dazu verwendet werden, den Verdunstungsanteil des Niederschlags zu berechnen, der auf unversiegelte oder teilweise versiegelte Ausbringungsfläche aufgebracht wird, bei welchen der Versickerungsanteil nicht dem Speicherraum zufließt. Dies betrifft insbesondere diejenigen Fälle, bei denen die Ausbringungsfläche nicht mit der Auffangfläche übereinstimmt. Hier werden für die konkrete Ausbringungsfläche kontinuierlich oder bevorzugt in bestimmten Zeitintervallen, insbesondere wenn ein Bewässerungsvorgang stattgefunden hat, mittels der Sensoren Klimadaten wie insbesondere die Temperatur im Bereich der Ausbringungsfläche und gegebenenfalls deren Bodenfeuchte ermittelt, und die Messwerte werden in der elektronischen Steuervorrichtung ausgewertet und mit hinterlegten Werten verglichen, aus denen sich der Anteil der Verdunstung des auf die Ausbringungsfläche ausgebrachten Niederschlags in Abhängigkeit von den Klimadaten ergibt. Alternativ kann der Verdunstungsanteil selbstverständlich auch mittels einer hinterlegten Formel berechnet werden.

Die Erfindung soll nachfolgend am Beispiel von Zeichnungen näher erläutert werden. Die Zeichnungen sind rein schematisch und dienen ausschließlich der Erläuterung bevorzugter Ausführungsbeispiele der Erfindung, ohne dass die Erfindung auf diese Beispiele beschränkt wäre. In den Zeichnungen sind gleiche Teile mit gleichen Bezugszeichen bezeichnet, wobei nicht jedes Teil immer mit einem Bezugszeichen versehen ist. Im Einzelnen zeigen:

Fig. 1    ein ertes Ausführungszbeispiel eines erfingungsgemäßen Wasserbilanzsteuerungssystem in teilweise geschnittener perskpektivischer Darstellung;

Fig. 2    ein zweites Ausführungszbeispiel eines erfingungsgemäßen Wasserbilanzsteuerungssystem in teilweise geschnittener perskpektivischer Darstellung

Fig. 3    ein drittes Ausführungszbeispiel eines erfingungsgemäßen Wasserbilanzsteuerungssystem in teilweise geschnittener perskpektivischer Darstellung;

Fig. 4     ein viertes Ausführungszbeispiel eines erfingungsgemäßen Wasserbilanzsteuerungssystem in teilweise geschnittener perskpektivischer Darstellung;

Fig. 5     ein fünftes Ausführungszbeispiel eines erfingungsgemäßen Wasserbilanzsteuerungssystem in teilweise geschnittener perskpektivischer Darstellung;

Fig. 6     ein sechstes Ausführungszbeispiel eines erfingungsgemäßen Wasserbilanzsteuerungssystem in teilweise geschnittener perskpektivischer Darstellung sowie

Fig. 7     ein schematisches Ablaufdiagramm einer Variante des erfindunggemäßen Verfahrens zum Betrieb eines erfinsungsgemäßen Wasserbilanzsteuerungssystem.

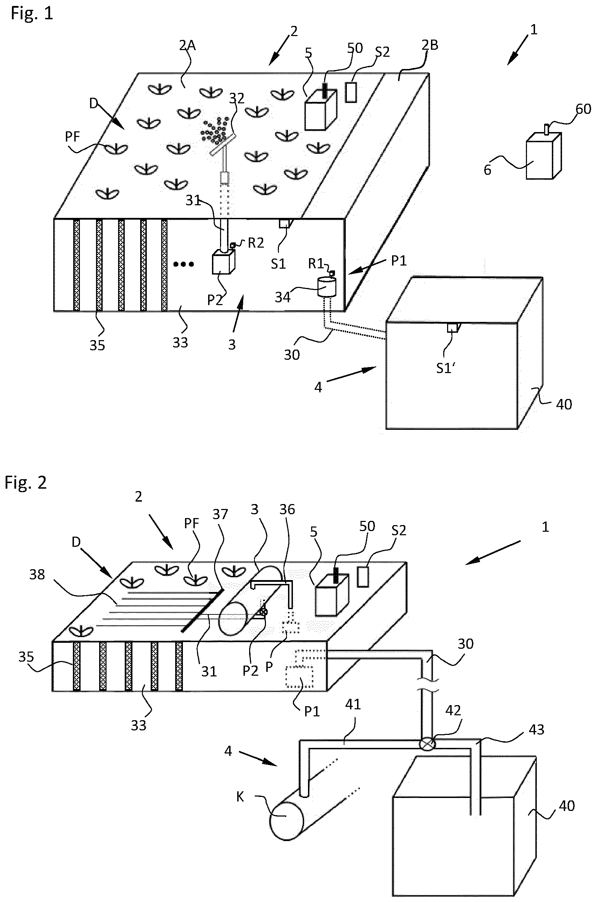

Figur 1 zeigt ein erstes Beispiel eines erfindungsgemäßen Wasserbilanzsteuerungssystems 1 am Beispiel einer Tiefgaragen-Anlage. Das Dach der Tiefgarage, welches mit den nicht dargestellten Umgebungsflächen im Wesentlichen in einer Ebene liegt, stellt die Auffangfläche 2 des Wasserbilanzsteuerungssystems 1 dar. Die Auffangfläche 2 teilt sich in zwei Teilflächen auf, von denen die Teilfläche 2A als Dachbegrünung angelegt ist, während Teilfläche 2B ein mit Platten belegter Gehweg ist, der das Tiefgaragendach quert. Niederschlag, welcher auf der Teilfläche 2B niedergeht, fließt seitlich in die Dachbegrünung D ab. Auf die Teilfläche 2A niedergehender Niederschlag sickert, von Verdunstungsverlusten abgesehen, durch die Dachbegrünung D hindurch und gelangt - ebenso wie der der Dachbegrünung von der Teilfläche 2B zugeflossene Niederschlag - in einen unterhalb der Auffangfläche 2 liegenden Speicherraum 3, der im gezeigten Fall als Wasser-Retentionsbox 33 ausgebildet ist. Die Wasser-Retentionsbox, die grundsätzlich in aus dem Stand der Technik üblicher Weise ausgebildet ist, umfasst einen von einer (der Übersichtlichkeit halber nicht gezeigten) Gerüststruktur definierten Hohlraum. Da die Wasser-Retentionsbox im gezeigten Beispiel der einzige Speicherraum ist, in dem der Niederschlag dauerhaft gespeichert wird, wird das Volumen der Wasser-Retentionsbox in der Regel größer zu bemessen sein, als dies bei herkömmlichen Dachbegrünungs-Wasserspeichern der Fall ist. Im Hohlraum der Wasser-Retentionsbox ist in an sich bekannter Weise eine Vielzahl von (teilweise dargestellten) Kapillarvliesbahnen 35 angeordnet. Diese erstrecken sich im Wesentlichen über die volle Höhe der Wasser-Retentionsbox und sind aus einem Vliesmaterial gefertigt, welches in der Lage ist, mittels Kapillarkräften am Boden der Wasser-Retentionsbox stehendes Wasser bis zur Dachbegrünung D zu transportieren und das dort aufgebrachte, eine Bepflanzung PF tragende Substrat zu befeuchten. Weiter ist in der Wasser-Retentionsbox eine Pumpe P2 angeordnet, von der ausgehend eine Entnahmeleitung 31 an die Oberfläche der Dachbegrünung D geführt ist und in einer Abgabevorrichtung 32, hier in Form eines Sprühkopfes, zur Bewässerung der Bepflanzung PF mündet. Die Pumpe P2 stellt in der gezeigten Ausführungsform das Mittel zum steuerbaren Fördern von Wasser in der Entnahmeleitung 31 dar. Die Ausbringungsfläche, auf der das gesammelte Wasser verteilt wird, entspricht im gezeigten Beispiel also der Auffangfläche bzw. deren begrünter Teilfläche 2A. Durch das Versprühen mittels Sprühkopf 32 wird zumindest ein Teil des Wassers verdunstet. Weiterhin weist das System 1 ein Mittel P1 zum steuerbaren Abführen von Wasser über eine Abflussleitung 30 auf, nämlich konkret hier eine steuerbare Ablaufdrossel 34, wie sie beispielsweise in der EP2982810 A1 oder EP 3202995 A1 der Anmelderin beschrieben oder unter der Bezeichnung "Smart Flow Control" von der Anmelderin erhältlich ist. Die Abflussleitung 30 mündet in eine unterirdisch angeordnete Versickerungsrigole 40, aus der Wasser nach und nach ins Erdreich versickern kann.

Zum Steuern des Wasserbilanzsteuerungssystems 1 entsprechend dem erfindungsgemäßen Betriebsverfahren ist eine elektronische Steuervorrichtung 6 vorhanden, welche entfernt von dem System 1 aufgestellt ist. Beispielsweise kann die elektronische Steuervorrichtung bei einem Dienstleister aufgestellt sein, der für den Besitzer der Tiefgarage die Steuerung des Systems 1 übernimmt und auch die für die Steuerung erforderlichen Daten beschafft. Neben den Daten, die den konkreten Aufbau des Systems 1 selbst betreffen (insbesondere die Abmessungen des Speicherraums 3 sowie der Versickerungsrigole 40, Art und Größe der Auffangfläche 2 und konkret der Teilflächen 2A und 2B, die Art der Dachbegrünung D, Förderleistung der Pumpe P2 sowie Ablaufleistung der Ablaufdrossel P1) sind dies auch den Standort des Systems 1 betreffende Wetterdaten der Vergangenheit sowie Wettervorhersagedaten. Zudem ist am Ort des Systems 1 selbst eine elektronische Auswertungseinheit 5 installiert, die über einen Sender und Empfänger 50 verfügt, um per Mobilfunk Daten mit der elektronischen Steuervorrichtung 6 auszutauschen, die zu diesem Zweck ebenfalls einen Sender und Empfänger 60 aufweist. Die elektronische Auswertungseinheit 5 empfängt Messergebnisse von Sensoren, die im erfindungsgemäßen Wasserbilanzsteuerungssystem installiert sind. Im gezeigten Beispiel handelt es sich um einen Ultraschallsensor S1, mit welchem der Wasserstand im Speicherraum 3 gemessen werden kann, einen Ultraschallsensor S1' zur Messung des Wasserstandes in der Versickerungsrigole 40 sowie einen Temperatursensor S2 zur Messung der Temperatur im Bereich der Auffangfläche 2. Alle Sensoren übermitteln in vorgegebenen Abständen Messergebnisse entweder kabelgebunden oder kabellos an die elektronische Auswertungseinheit 5, welche die Messergebnisse verarbeitet und an die elektronische Steuervorrichtung 6 weiterleitet.

Bevor das System 1 erstmals in den regulären Betrieb genommen wird, wird in der elektronischen Steuervorrichtung 6 zunächst ein Simulationsprogramm gestartet, bei dem mit den in der Steuervorrichtung hinterlegten Wetterdaten für den Standort des Wasserbilanzsteuerungssystems in einem zurückliegenden Zeitraum, beispielsweise für wenigstens zwei zurückliegende Jahre, unter Berücksichtigung der Abmessungen der Speicherräume und Auffangfläche sowie Art und Umfang der Dachbegrünung anhand der eingangs beschriebenen Formeln 1 bis 7 eine Wasserbilanz für einen Zeitraum, der dem später im regulären Betrieb betrachteten Zeitraum entspricht, eine Wasserbilanz ohne Steuerungseinflüsse berechnet. Von dieser simulierten Wasserbilanz ausgehend wird anschließend eine Ziel-Wasserbilanz festgesetzt, die für die auf der Auffangfläche zu erwartenden Niederschläge bestimmte Verteilungsanteile von Verdunstung und Abfluss festlegt, wobei der Abfluss gegebenenfalls in bestimmte Anteile von Versickerung und direktem Abfluss aufgeteilt wird. Zu dieser Ziel-Wasserbilanz werden dann unter Berücksichtigung der Gegebenheiten des Systems die erforderlichen Zielgrößen berechnet (vergleiche Formeln 8 bis 13). Die Zielgröße kann dabei absolut oder relativ festgelegt werden. Nach Inbetriebnahme des Systems erfolgt die Steuerung des Wasserbilanzsteuerungssystems 1 im regulären Betrieb dann entsprechend den in Formeln 14 bis 19 beschriebenen Algorithmen. Die als Fördervolumina angegebenen Ergebnisse werden zweckmäßig von der elektronischen Steuervorrichtung 6 noch in Steuerparameter umgerechnet, bevorzugt in eine Zeitdauer zum Betrieb der Pumpe P2 und der Ablaufdrossel P1. Die elektronische Steuervorrichtung 6 übermittelt die Steuerparameter per Mobilfunk an die elektronische Auswertungseinheit 5, welche den Steuerparametern entsprechende Steuerbefehle an die Mittel P1 und P2 weitergibt. Konkret geschieht dies hier dadurch, dass die elektronische Auswertungseinheit die den Mitteln P1 und P2 zugeordneten Relays R1 und R2 für die von der Steuervorrichtung vorgegebene Zeitdauer ansteuert und die Mittel P1 und P2 für die vorgegebene Zeitdauer betrieben werden. Dadurch wird der auf die Auffangfläche 2 niedergehende Niederschlag, der im Speicherraum 3 gesammelt wurde, entsprechend der vorgegebenen Ziel-Wasserbilanz in Verdunstung (Rückführung zur Dachbegrünung D) und Abfluss (Versickerung in der Versickerungsrigole 40) aufgeteilt. Der Anteil, welcher der Dachbegrünung mittels Kapillarvliesbahnen 35 zugeführt wird, wird in den Verdunstungsanteil einberechnet. Ein direkter Abfluss der Niederschläge ist im gezeigten Beispiel nicht vorgesehen. Dies setzt eine ausreichend große Dimensionierung des Versickerungsspeichers 40 voraus.

Bei dem in Figur 2 dargestellten Wasserbilanzsteuerungssystem 1 handelt es sich um ein System mit Dachbegrünung D, wobei diese diesmal auf einem Hausdach angeordnet ist. Unterhalb der Dachbegrünung D ist erneut eine Wasser-Retentionsbox 33 mit Kapillarvliesbahnen 35 zur Versorgung der Dachbegrünung mit Feuchtigkeit angeordnet. Allerdings ist die Wasser-Retentionsbox 33 in diesem Beispiel nicht der einzige Speicherraum, sondern es ist vielmehr ein Wassertank als Speicherraum 3 auf dem Dach vorhanden. Über eine Zuleitung 36 kann der Wassertank 3 mittels einer Pumpe P, die in der Wasser-Retentionsbox 33 angeordnet ist, mit Wasser versorgt werden, welches von der Dachbegrünung D in die Wasser-Retentionsbox durchgesickert ist. Aus dem Wassertank 3 verläuft eine durch ein steuerbares Ventil P2 öffen- und verschließbare Entnahmeleitung 31 in Richtung zur Oberfläche der Dachbegrünung D hin und mündet in einen Verteiler 37, von dem aus sich mehrere Tropfschläuche 38 über die Oberfläche der Dachbegrünung D erstrecken, um die nur teilweise eingezeichnete Bepflanzung PF zu bewässern. Dabei verdunstet zumindest ein Teil des Wassers, während nicht verdunstetes Wasser in die Wasser-Retentionsbox zurückfließt. Weiterhin ist in der Wasser-Retentionsbox 33 eine steuerbare Pumpe P1 vorhanden, die in eine Abflussleitung 30 mündet, welche wiederum zu einem Abfluss 4 führt. Dieser Abfluss umfasst ein steuerbares Verteilerventil 42, mit welchem das dem Abfluss zugeleitete Wasser gezielt in einen Anteil Versickerung (über Leitung 43 zur Versickerungsrigole 40) und einen Anteil direkten Abfluss (über Leitung 41 in die Kanalisation K) aufgeteilt werden kann. Die Steuerung der Pumpen P, P1, des Ventils P2, welches in diesem Beispiel das Mittel zum steuerbaren Fördern von Wasser darstellt, sowie des Verteilerventils 42 erfolgen in analoger Weise wie vorstehend beschrieben mittels einer elektronischen Steuervorrichtung 6, welche Steuerparameter an eine elektronische Auswertungseinheit 5 übermittelt, die diese wiederum an die entsprechenden Komponenten weitergibt. Die im System 1 vorhandenen Sensoren sind hier (wie auch in den nachfolgenden Beispielen) nicht oder nur noch teilweise eingezeichnet. Ihre Anordnung und Funktion entspricht dem vorstehend Beschriebenen.

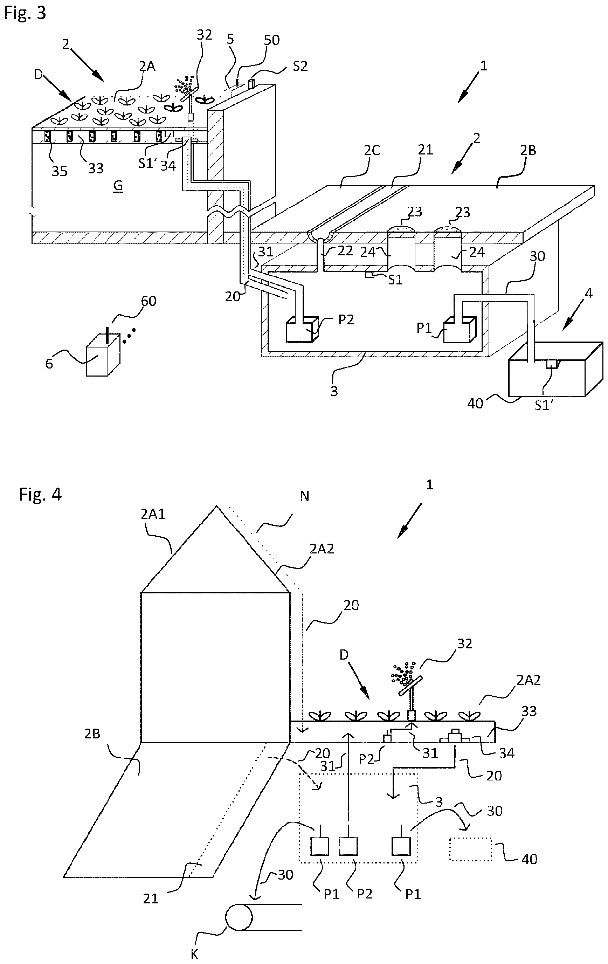

Das Ausführungsbeispiel der Figur 3 zeigt ein komplexeres Wasserbilanzsteuerungssystem 1 mit mehreren, räumlich voneinander getrennten Auffangflächen 2, nämlich einer Teilfläche 2A mit einer Dachbegrünung D, die auf dem Dach eines Gebäudes G, beispielsweise eines Supermarktes, angeordnet ist. Auf der Dachfläche 2A niedergehender Niederschlag wird in der unterhalb der Dachbegrünung D angeordneten Wasser-Retentionsbox 33, erneut mit Kapillarvliesbahnen 35, gesammelt und kann nach Öffnen einer steuerbaren Ablaufdrossel 34 über eine Abflussleitung 20 einem Speicherraum 3 zugeführt werden. Bei dem Speicherraum 3 handelt es sich um eine unterirdisch angeordnete abgedichtete Rigole. Sie ist teilweise unterhalb eines geteerten Parkplatzes 2B und teilweise unterhalb eines mit Platten belegten Gehweges 2C angeordnet, der zwischen Parkplatz 2B und Gebäude G liegt. Niederschlag, der auf den Gehweg 2C fällt, wird einer Rinne 21 zugeleitet, deren Abfluss 22 in den Speicherraum 3 mündet. Auch ein Teil des auf dem Parkplatz 2B niedergehenden Niederschlages gelangt auf diesem Weg in den Speicherraum 3. Weiterer auf den Parkplatz 2B fallender Niederschlag fließt durch die Öffnungen der Gullydeckel 23 und die Gullyschächte 24 ebenfalls dem Speicherraum 3 zu. Zur Auffangfläche 2 zählen alle Flächen, von denen Niederschlag dem Speicherraum 3 zufließt.

Speicherbefehle der elektronischen Steuervorrichtung 6, die an die elektronische Auswertungseinheit 5 übermittelt und von dieser an die Pumpen P1 und P2 sowie die Ablaufdrossel 34 weitergegeben werden, sorgen für eine Verteilung des im Speicherraum 3 gespeicherten Wassers entsprechend dem der festgelegten Wasserbilanz vorgegebenen Verteilungsschlüssel. Ein Teil des gespeicherten Niederschlages wird mittels Pumpe P2 über die Entnahmeleitung 31 wieder zur Dachbegrünung D als der Ausbringungsfläche zurückgeführt und über die Abgabevorrichtung 32, eine Beregnungsvorrichtung, auf der Dachbegrünung verteilt und so zumindest teilweise der Verdunstung zugeführt. Nicht verdunstetes Wasser versickert durch die Dachbegrünung hindurch in die Wasser-Retentionsbox und gelangt von dort nach Passieren der Ablaufdrossel 34 und der Abflussleitung 20 in den Speicherraum 3 zurück, von wo es erneut verteilt werden kann. Ein anderer Teil des im Speicherraum 3 gespeicherten Wassers wird mithilfe der Pumpe P1 über die Abflussleitung 30 einem unterirdisch angeordneten Versickerungsspeicher 40 zugeführt, von wo es nach und nach ins Erdreich versickert.

Figur 4 zeigt ein ähnliches System wie in Figur 3 mit mehreren Teilflächen, die insgesamt die Auffangfläche 2 bilden. Konkret sind dies die Dachflächen 2A1 und 2A2, von denen letztere eine begrünte Tiefgaragen-Dachfläche ist, sowie eine teilversiegelte Hoffläche 2B. Derjenige Teil des Niederschlages, der auf der Hochfläche 2B niedergeht und nicht im Erdreich versickert, wird mittels einer Rinne 21 gesammelt und einem im Untergrund eingegrabenen abgedichteten Tiefbauspeicher 3 zugeführt. Auf den Hausdachflächen 2A1 niedergehender Niederschlag N wird in einer Dachrinne gesammelt und über ein Fallrohr 20 einer Wasser-Retentionsbox 33 zugeleitet, welche unterhalb der Dachbegrünung D angeordnet ist. Der Wasser-Retentionsbox 33 fließt auch der Niederschlag zu, der auf der Tiefgaragen-Dachfläche 2A2 niedergeht und durch die Dachbegrünung D hindurchsickert. Das in der Wasser-Retentionsbox 33 gesammelte Wasser kann durch Öffnen der gesteuerten Ablaufdrossel 34 über eine Zuleitung 20 ebenfalls dem Speicher 3 zugeführt werden. Die einzelnen Leitungen, durch die im gezeigten Beispiel das Wasser gefördert wird, sind hier nicht mehr explizit eingezeichnet, sondern der Wasserfluss wird nur noch schematisch mithilfe der Pfeile verdeutlicht. Die Verteilung des im Speicher 3 gesammelten Niederschlages erfolgt mithilfe der Pumpen P1 und P2. Die Pumpen P1 führen den dafür vorgesehenen Anteil des Niederschlags über Abflussleitungen 30 dem Abfluss zu. Dieser teilt sich im gezeigten Beispiel in einen Anteil an direktem Abfluss sowie einen Anteil an Versickerung auf. Letzterer Anteil wird eine Versickerungsrigole 40 zugeführt, während der direkte Abfluss durch Einleiten in eine Kanalisation K realisiert wird. Pumpe P2 fördert denjenigen Anteil des im Speicher 3 gespeicherten Niederschlages, der zur Verdunstung vorgesehen ist, über die Entnahmeleitung 31 in die Wasser-Retentionsbox 33. Von dort wird das Wasser mittels einer weiteren Pumpe P 2, die sich im Hohlraum der Wasser-Retentionsbox 33 befindet, der Abgabevorrichtung 32 zugeführt und von dieser auf der Dachbegrünung D als Ausbringungsfläche verteilt.

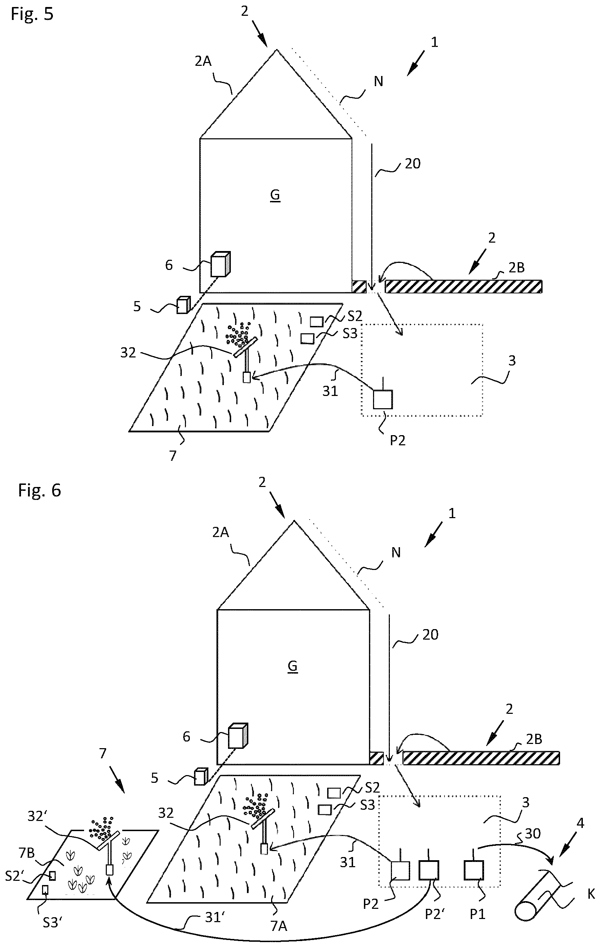

Figur 5 zeigt ein weiteres Ausführungsbeispiel eines erfindungsgemäßen Systems, diesmal ohne eine Dachbegrünung. Die unbegrünte Dachfläche 2A stellt eine Teilfläche der Auffangfläche 2 dar, von der Niederschlag N über ein Fallrohr 20 einem Tiefbauspeicher 3 zugeleitet wird. Zur Auffangfläche 2 gehört zudem eine Hoffläche 2B, von der über einen Gully dem Tiefbauspeicher 3 ebenfalls Niederschlag zugeleitet wird. Die Hoffläche 2B ist eine teilversiegelte Fläche, beispielsweise eine Lochbetonfläche oder ähnliches, von der nur ein Teil des Niederschlages dem Speicher 3 zufließt, während ein anderer Teil im Erdreich versickert. Dieser versickerte Teil des Niederschlags muss in der Wasserbilanz dem Versickerungsanteil zugeschlagen werden. Dies geschieht rechnerisch, indem zunächst vorab bestimmt wird, welcher Anteil des auf der Hoffläche 2B niedergehenden Niederschlages versickert. Der während des Betriebs des Systems auf der Hoffläche 2B niedergehende Niederschlag wird entweder vor Ort mit einem Niederschlagsmesser oder aus den für den Standort des Systems übermittelten Niederschlagsdaten des Wetterdienstes bestimmt, und für die jeweilige Niederschlagsmenge wird anhand des vorab bestimmten Versickerungsanteils die jeweilige Versickerungsmenge für die Hoffläche 2B errechnet und bei der Berechnung der Wasserbilanz und der Steuerung des Systems berücksichtigt.

Im Speicher 3 ist eine Pumpe P2 angeordnet, mit welcher der aufgefangene Niederschlag über eine Entnahmeleitung 31 einer Abgabevorrichtung 32, hier eine Beregnungsvorrichtung, zugeführt wird, welche den Niederschlag auf der Ausbringungsfläche 7 versprüht. Im Unterschied zu den vorhergehenden Beispielen handelt es sich bei der Ausbringungsfläche 7 hier nicht um eine Dachbegrünung, sondern um eine herkömmliche Grünfläche, beispielsweise um eine landwirtschaftlich oder gartenbaulich genutzte Fläche oder um eine landwirtschaftlich und gartenbaulich nicht genutzte Brachfläche, beispielsweise eine Wiese. Anders als in den vorangegangenen Beispielen gelangt das von dieser Ausbringungsfläche 7 versickernde oder abfließende Wasser nicht in den Speicher 3. Um zu bestimmen, in welcher Weise sich auf die Ausbringungsfläche 7 aufgebrachtes Wasser in die Anteile Verdunstung, Versickerung und gegebenenfalls direkten Abfluss aufteilt, werden vorab in an sich bekannter Weise über einen längeren Zeitraum, beispielsweise mindestens ein Jahr, Messungen durchgeführt, bei denen für verschiedene Niederschlagsmengen und verschiedene Temperaturen die entsprechenden Anteile ermittelt und die jeweiligen Werte abgespeichert werden. Alternativ können, wenn die Parameter der Auffangfläche (kf-Wert Boden, Bodenart, Vegetation) bekannt sind und für eine gleiche oder sehr ähnliche Vegetationsart bereits zuvor ermittelte Werte existieren, auch die bekannten Werte verwendet und entsprechende Werte in der Steuervorrichtung hinterlegt werden, sodass eine gesonderte Werteermittlung entfällt. Aus diesen in der elektronischen Steuervorrichtung 6 hinterlegten Werten werden im realen Betrieb für die auf die Ausbringungsfläche zu einem bestimmten Betriebszeitpunkt ausgebrachte Niederschlagsmenge die auf die Verdunstung, Versickerung und gegebenenfalls auf den direkten Abfluss entfallenden Mengen rechnerisch bestimmt. Da im gezeigten Beispiel kein Mittel zum Abführen von Wasser und kein künstlicher Abfluss vorgesehen sind, kann ein direkter Abfluss nur in Form eines natürlichen Oberflächenabflusses stattfinden. Bevorzugt wird das gezeigte System jedoch so betrieben, dass der Abfluss vollständig über eine Versickerung erfolgt. Das Erreichen des gewünschten Verdunstungsanteils erfolgt, wie bereits vorstehend beschrieben, dadurch, dass an Tagen hoher Temperatur, die mit einem Temperatursensor S2 ermittelt wird, verstärkt Wasser über die Abgabevorrichtung 32 auf die Ausbringungsfläche 7 ausgebracht wird, wenn sich der Verdunstungsanteil unterhalb des geforderten Solls befindet. Zusätzlich zum Temperatursensor S2 ist im Beispiel ein Bodenfeuchte-Sensor S3 vorhanden, der - wie der Sensor S2 - Messdaten drahtlos an eine elektronische Auswertungseinheit 5 übermittelt, welche über eine Kabelverbindung mit der elektronischen Steuervorrichtung 6 verbunden ist, welche hier im Gebäude G aufgestellt ist. Vom Bodenfeuchte-Sensor S3 festgestellte geringe Feuchtigkeitswerte und/oder vom Sensor S2 übermittelte hohe Temperaturwerte können die Steuervorrichtung 6 veranlassen, der Pumpe P2 einen Pumpbefehl zu erteilen, um über die Abgabevorrichtung 32 die Ausbringungsfläche 7 zu bewässern.

Figur 6 zeigt eine Weiterbildung des Ausführungsbeispiels der Figur 5. Die Ausbringungsfläche 7 teilt sich nun in zwei räumlich voneinander getrennte Teilflächen 7A und 7B auf. Teilfläche 7A ist beispielsweise eine landwirtschaftlich genutzte Fläche, zum Beispiel für den Anbau von Gemüse. Bei Teilfläche 7B handelt es sich beispielsweise um ein Blumenbeet. Beide Teilflächen können unabhängig voneinander aus dem Speicher 3 mit Wasser versorgt werden, Teilfläche 7A über Pumpe P2 und Entnahmeleitung 31, Teilfläche 7B über Pumpe P2' und Entnahmeleitung 31'. Die Anteile an Verdunstung, Versickerung und gegebenenfalls direktem Abfluss werden für die Teilfläche 7B ebenso wie für die Teilfläche 7A vorab bestimmt und sind üblicherweise voneinander verschieden. Die Berechnung der Anteile erfolgt jeweils für die beiden Teilflächen getrennt. Desgleichen erfolgt auch eine unabhängige Steuerung der Bewässerung beider Teilflächen. Zu diesem Zweck sind auf der Teilfläche 7B auch eigene Sensoren für Temperatur (S2') und Bodenfeuchte (S3') vorgesehen, die ihre Messergebnisse ebenfalls drahtlos an die elektronische Auswertungseinheit 5 übermitteln. Das gezeigte System mit zwei unabhängig voneinander bewässerbaren Teilflächen ermöglicht eine höhere Flexibilität bei der Erreichung der vorgegebenen Wasserbilanz, da beispielsweise Abweichungen bei den Werten einer Teilfläche auch über die Bewässerung der anderen Teilfläche oder beider Teilflächen gemeinsam ausgeglichen werden können. Zudem sieht das System einen Abfluss 4 vor, über den ein direkter Abfluss durch Einleitung von Niederschlag in die Kanalisation K realisiert werden kann. Die Einleitung erfolgt über eine Abflussleitung 30 mithilfe einer Pumpe P1.

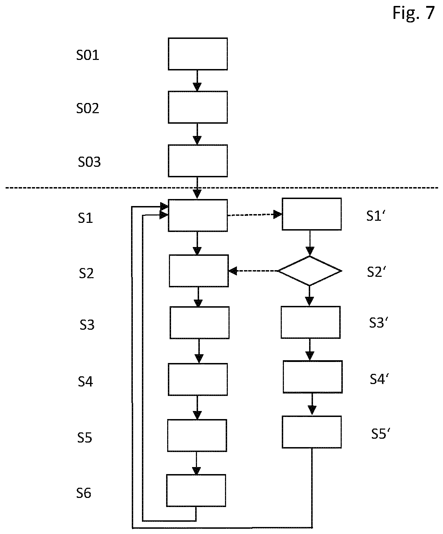

Figur 7 stellt schematisch einen möglichen Ablauf des erfindungsgemäßen Verfahrens zum Betrieb eines Wasserbilanzsteuerungssystems dar. Bevor das Betriebssystem seinen regulären Betrieb aufnehmen kann, wird zunächst ein in Schritt S01 ein Simulationsverfahren durchgeführt, um eine Wasserbilanz für das konkrete System 1 (beispielsweise das in Figur 4 dargestellte) ohne Steuerungseinflüsse zu ermitteln. Dafür werden Wetterdaten der Vergangenheit, beispielsweise der zurückliegenden zwei Jahre, für den Standort des Systems 1 herangezogen sowie Daten, welche die konkrete Ausgestaltung des Systems betreffen, insbesondere die Abmessungen des Speicherraums 3 sowie der Versickerungsrigole 40, Art und Größe der Auffangfläche 2 und konkret der Teilflächen 2A1, 2A2 und 2B, die Art der Dachbegrünung D, Förderleistung der Pumpen P1, P2 sowie Ablaufleistung der Ablaufdrossel 34. Wie vorstehend beschrieben, wird anhand der Formeln 1 bis 7 für einen dem Betrachtungszeitraum t (zum Beispiel 1 Jahr) im realen Betrieb entsprechenden Zeitraum der Vergangenheit eine geschätzte mittlere Wasserbilanz berechnet. In Schritt S02 wird durch Hinzufügen von zur Verfügung stehenden Stellgrößen im Simulationsmodell eine realistische Ziel-Wasserbilanz ermittelt (Formeln 8 bis 11) und für diese werden der im realen Betrieb einzuhaltende Zielwerte für Verdunstung und Abfluss, gegebenenfalls aufgeteilt in Versickerung und direkten Abfluss) festgesetzt (als absoluter oder relativer Wert, vergleiche Formeln 12 und 13). Zur Einhaltung dieser festgelegten Zielwerte werden in der elektronischen Steuervorrichtung Steueralgorithmen (wie Formeln 14 bis 19) sowie die für die Berechnung der einzelnen Steuergrößen erforderlichen Werte, insbesondere Sollwerte, hinterlegt. Dabei ist es bevorzugt, den Betrachtungszeitraum t (hier 1 Jahr) in kleinere Teilzeiträume zu unterteilen. Zum Beispiel können dies die Jahreszeiten t1 = Frühling, t2 = Sommer, t3 = Herbst und t4 = Winter sein oder einzelne Monate als t1 bis t12. Für jeden der Teilzeiträume werden dann eigene Werte festgelegt.

Ist die Programmierung der elektronischen Steuervorrichtung abgeschlossen, kann der eigentliche Betrieb beginnen. Dafür werden in Schritt S1 Sensordaten mithilfe der Sensoren (S1, S1', S2) ermittelt und an die elektronische Auswertungseinheit 5 übertragen. In Schritt S2 überträgt die elektronische Auswertungseinheit 5 die gesammelten Daten entweder direkt an die elektronische Steuervorrichtung 6, welche die empfangenen Daten unter Erhalt von Auswertungsergebnissen auswertet. Alternativ kann die Auswertung der Sensordaten auch in der elektronischen Auswertungseinheit erfolgen, die dann die ausgewerteten Daten (Auswertungsergebnisse) an die elektronische Steuervorrichtung überträgt. In Schritt S3 werden die Auswertungsergebnisse von der elektronischen Steuervorrichtung mit in dieser hinterlegten Sollwerten verglichen. Sind Teilzeiträume mit eigenen Sollwerten hinterlegt, erfolgt der Vergleich mit den für den jeweiligen Teilzeitraum relevanten Werten. Auf der Basis des Vergleichs zwischen Auswertungsergebnissen und Sollwerten ermittelt die elektronische Steuervorrichtung 6 Steuerparameter (Schritt S4) und übermittelt letztere in Schritt S5 an die elektronische Auswertungseinheit 5. Auf der Basis der übermittelten Steuerparameter werden dann das Mittel P2 zum steuerbaren Fördern von Wasser sowie die Mittel P1 zum steuerbaren Abführen von Wasser gesteuert.

Das Ergebnis des Betriebes ist die Aufteilung des auf der Auffangfläche 2 niedergegangenen Niederschlages N in durch die für das System 1 festgelegte Wasserbilanz vorgegebene Anteile von Verdunstung, Versickerung und direktem Abfluss.

In einer optionalen Weiterbildung des Betriebsverfahrens können Wettervorhersagedaten in die Steuerung des Systems 1 einbezogen werden. Die Wettervorhersagedaten werden entweder über einen Wetterserver oder von einer lokalen Wetterstation für das Gebiet bezogen, in dem sich das System 1 befindet. In Schritt S1' werden die Wettervorhersagedaten entweder in der elektronischen Auswertungseinheit 5 oder bevorzugt in der elektronischen Steuereinheit 6 durch Vergleich mit entsprechenden Sollwerten ausgewertet. In einem Fall können sich die Wettervorhersagedaten beispielsweise auf die für die Folgetage zu erwartenden Niederschläge im Gebiet beziehen. Ergibt der Vergleich in Schritt S1', dass die zu erwartenden Niederschläge den vorgegebenen Sollwert überschreiten, unterbricht in Schritt S2' die elektronische Steuervorrichtung 6 das reguläre Steuerverfahren und schaltet den einen Sonderbetriebsmodus um. Wird dagegen keine Abweichung von den Sollwerten festgestellt, wird das reguläre Steuerverfahren fortgesetzt. Auf Schritt S1' und die Entscheidung für das reguläre Verfahren in Schritt S2' folgt Schritt S2. Im Sonderbetriebsmodus läuft das Steuerverfahren dagegen mit Schritten S3' bis S5' weiter. Konkret kann der Sollwert, anhand dessen die Entscheidung getroffen wird, ob im regulären oder im Sonderbetriebsmodus weiter verfahren wird, dadurch festgelegt werden, dass mithilfe der von im Speicherraum 3 sowie in der Wasser-Retentionsbox 33 angeordneten Ultraschallsensoren übermittelten Daten errechnet wird, wie groß der freie Speicherraum zum Zeitpunkt der Messung ist. Die entsprechend den Wettervorhersagedaten zu erwartenden Niederschlagsmenge wird mit dem errechneten freien Speicherraum verglichen (siehe Formel 20). Entsprechend dem Ergebnis des Vergleiches erfolgt in Schritt S2' die Auswahl über den weiteren Verlauf des Betriebs. Wird in den Sonderbetriebsmodus gewechselt, errechnet die elektronische Steuervorrichtung in Schritt S3' das Volumen, welches aus dem Speicherraum 3 und gegebenenfalls der Wasser-Retentionsbox 33 abgelassen werden muss (vergleiche Formeln 21) und teilt das abzulassende Volumen in geeignete Anteile von Versickerung und direktem Abfluss auf. In Schritt S4' wandelt die elektronische Steuervorrichtung die berechneten Volumina um in zugehörige Steuerparameter wie insbesondere die Zeitdauern, mit denen die Pumpen P1 und P2 betrieben sowie gegebenenfalls die Ablaufdrossel 34 geöffnet werden müssen, und übermittelt die Steuerparameter an die elektronische Auswertungseinheit 5. Diese wiederum steuert die genannten Komponenten entsprechend den Steuerparametern. Als Folge davon werden die zuvor berechneten Volumina der Versickerung und/oder dem direktem Abfluss zugeführt. Danach kehrt das System in den regulären Betrieb (Schritt S1) zurück.

**Patentansprüche**

1. Wasserbilanzsteuerungssystem (1), umfassend

   eine Auffangfläche (2) zum Auffangen von Niederschlag,
   einen Speicherraum (3), der von der Auffangfläche (2) ablaufenden Niederschlag (N) aufnimmt,
   eine Abgabevorrichtung (32) und eine Ausbringungsfläche (7),
   eine Entnahmeleitung (31), mit welcher Wasser aus dem Speicherraum (3) entnommen werden kann, um über die Abgabevorrichtung (32) der Ausbringungsfläche (7) zugeführt zu werden,
   Mittel (P2) zum steuerbaren Fördern des Wassers in der Entnahmeleitung (31),
   einen Sensor (S1) zur Ermittlung des Wasserstandes im Speicherraum (3),
   wenigstens einen Sensor (S2) zur Ermittlung einer Klimaeigenschaft,
   eine elektronische Auswertungseinheit (5), welche ausgebildet ist, von den Sensoren (S1, S2) übermittelte Daten zu empfangen und an eine elektronische Steuervorrichtung (6) zu übermitteln,
   **dadurch gekennzeichnet,**
   **dass** der wenigstens eine Sensor (S2) ein Sensor zur Ermittlung einer Klimaeigenschaft in der Umgebung der Auffangfläche (2) ist und dass die elektronische Steuervorrichtung (6) ausgebildet ist, unter Verwendung der von der elektronischen Auswertungseinheit (5) übermittelten Daten das Mittel (P2) so zu steuern, dass über einen vorgegebenen Zeitraum (t) eine vorgegebene Wasserbilanz erzielt wird, welche für die während des Zeitraums (t) auf die Auffangfläche (2) niedergegangene Niederschlagsmenge durch vorgegebene Anteile von Verdunstung (v) und Abfluss (a) gekennzeichnet ist.

2. Wasserbilanzsteuerungssystem (1) nach Anspruch 1,
   worin die Ausbringungsfläche (7) die Auffangfläche (2) oder eine, vorzugsweise begrünte, Teilfläche davon ist.

3. Wasserbilanzsteuerungssystem (1) nach Anspruch 1 oder 2,
   worin die Auffangfläche (2) und/oder die Ausbringungsfläche (7) in mehrere, gegebenenfalls räumlich voneinander getrennte Teilflächen (2A, 2B, 2C; 7A, 7B) unterteilt ist, wobei wenigstens eine der Teilflächen begrünt ist.

4. Wasserbilanzsteuerungssystem (1) nach einem der vorhergehenden Ansprüche,

worin die Auffangfläche (2) ausgewählt ist aus wenigstens einer der folgenden Flächen:

- einer Dachfläche (2A), insbesondere einem Gründach oder Kiesdach, einschließlich einem Tiefgaragendach,
- einer befahrbaren Fläche (2B), insbesondere einer Fahrbahn oder einem Parkplatz,
- einer begehbaren Fläche (2C), insbesondere einer mit einem Bodenbelag wie Kies oder Platten versehenen oder zumindest teilweise betonierten Fläche,

und/oder die Ausbringungsfläche (7), wenn sie von der Auffangfläche (2) verschieden ist, ausgewählt ist aus wenigstens einer der folgenden Flächen:

- einer gartenbaulich und/oder landwirtschaftlich genutzten Fläche,
- einer gartenbaulich und/oder landwirtschaftlich nicht genutzten Brachfläche, insbesondere einer Wiese.

5. Wasserbilanzsteuerungssystem (1) nach einem der vorhergehenden Ansprüche,

worin eine Abflussleitung (30), mit welcher Wasser aus dem Speicherraum (3) entnommen werden kann, um es einem Abfluss (4) zuzuführen, über den es aus dem Wasserbilanzsteuerungssystem (1) hinaus gelangt, sowie Mittel (P1) zum steuerbaren Abführen von Wasser über die Abflussleitung (30) vorgesehen sind, und die elektronische Steuervorrichtung (6) ausgebildet ist, unter Verwendung der von der elektronischen Auswertungseinheit (5) übermittelten Daten die Mittel (P1, P2) so zu steuern, dass über einen vorgegebenen Zeitraum (t) eine vorgegebene Wasserbilanz erzielt wird, welche für die während des Zeitraums (t) auf die Ausbringungsfläche (7) niedergegangene Niederschlagsmenge durch vorgegebene Anteile von Verdunstung (v) und Abfluss (a) gekennzeichnet ist.

6. Wasserbilanzsteuerungssystem (1) nach einem der vorhergehenden Ansprüche,
worin der Speicherraum (3) ausgewählt ist aus einer Wasser-Retentionsbox (33) einer Dachbegrünung (D), einem abgedichteten Pufferspeicher und einer insbesondere unterirdisch angeordneten abgedichteten Rigole oder Kombinationen derselben.

7. Wasserbilanzsteuerungssystem (1) nach einem der Ansprüche 5 und 6,
worin der Abfluss (4) als Versickerungsspeicher (40) und/oder als Zuleitung (41) in ein Kanalisationssystem (K) ausgebildet ist.

8. Wasserbilanzsteuerungssystem (1) nach einem Ansprüche 5 bis 7,
worin das Mittel (P2) zum steuerbaren Fördern des Wassers und das Mittel (P1) zum steuerbaren Abführen von Wasser ausgewählt sind aus einer Pumpe, einem steuerbaren Ventil, einer automatisch gesteuerten Ablaufdrossel (34), einem automatisch betätigbaren Schieber und einer automatisch betätigbaren Klappe.

9. Wasserbilanzsteuerungssystem (1) nach einem der vorhergehenden Ansprüche,
worin die Abgabevorrichtung (32) eine Bewässerungsvorrichtung ist, insbesondere eine Tröpfchenbewässerungsvorrichtung, eine Beregnungsvorrichtung oder eine Vernebelungsanlage, oder die Abgabevorrichtung (32) ausgebildet ist, Wasser in eine Wasser-Retentionsbox (33) abzugeben, aus welcher es zur Abgabe auf die Auffangfläche (2) entnehmbar ist.

10. Wasserbilanzsteuerungssystem (1) nach einem der vorhergehenden Ansprüche,
worin der Sensor (S2) zur Ermittlung einer Klimaeigenschaft ausgewählt ist aus einem Temperatursensor, einem Luftfeuchtesensor und einem Solarstrahlungssensor.

11. Wasserbilanzsteuerungssystem (1) nach einem der vorhergehenden Ansprüche,
worin die elektronische Auswertungseinheit (5) Mittel (50) zum Senden und Empfangen von Daten aufweist, die eine kabelgebundene und/oder drahtlose Übertragung von Daten erlauben, wobei die Datenübertragung bevorzugt per Mobilfunk erfolgt.

12. Wasserbilanzsteuerungssystem (1) nach einem der vorhergehenden Ansprüche,
worin die elektronische Steuervorrichtung (6) ausgebildet ist, Wettervorhersagedaten in die Steuerung einzubeziehen, wobei die Wettervorhersagedaten bevorzugt solche für den Standort der Auffangfläche (2) sind.

13. Wasserbilanzsteuerungssystem (1) nach einem der vorhergehenden Ansprüche, worin der Zeitraum (t) mehrere Monate und insbesondere ein Jahr beträgt.

14. Wasserbilanzsteuerungssystem (1) nach einem der vorhergehenden Ansprüche, worin der Anteil der Verdunstung (v) 31 bis 100 %, bevorzugt 40 bis 98 %, besonders bevorzugt 50 bis 96 % und insbesondere 60 bis 95 %, beträgt und/oder der Anteil des Abflusses (a) 0 bis 70 %, bevorzugt 2 bis 60 %, besonders bevorzugt 4 bis 50 % und insbesondere 5 bis 40 %, beträgt, jeweils bezogen auf den auf der Auffangfläche (2) niedergehenden Niederschlag, wobei sich der Anteil des Abflusses (a) bevorzugt aufteilt in Versickerung (g) und direkten Abfluss (da), worin bevorzugt der Anteil des direkten Abflusses (da) am Gesamtabfluss (a) in einem Bereich von 0 bis 20 %, besonders bevorzugt 0 bis 15 % und insbesondere 0 bis 10 % liegt.

15. Verfahren zum Betrieb des Wasserbilanzsteuerungssystems (1) nach einem der vorhergehenden Ansprüche, umfassend die Schritte:

   - Ermitteln von Sensordaten mithilfe der Sensoren (S1, S2) und Übertragung der Sensordaten an die elektronische Auswertungseinheit (5),
   - Auswertung der Sensordaten in der elektronischen Auswertungseinheit (5) und Übermittlung der Auswertungsergebnisse an die elektronische Steuervorrichtung (6) oder Übermittlung der Sensordaten an die elektronische Steuervorrichtung (6) und Auswertung der Sensordaten in der elektronischen Steuervorrichtung (6) unter Erzeugung von Auswertungsergebnissen,
   - Vergleichen der Auswertungsergebnisse mit in der elektronischen Steuervorrichtung (6) hinterlegten Sollwerten,
   - Ermittlung von Steuerparametern in der elektronischen Steuervorrichtung (6) auf der Basis des Vergleichs zwischen Auswertungsergebnissen und Sollwerten,
   - Übermittlung der Steuerparameter an die elektronische Auswertungseinheit (5) und
   - Steuern des Mittels (P2) zum steuerbaren Fördern von Wasser sowie gegebenenfalls des Mittels (P1) zum steuerbaren Abführen von Wasser auf der Basis der übermittelten Steuerparameter.

16. Verfahren zum Betrieb des Wasserbilanzsteuerungssystems (1) nach Anspruch 15, worin die Steuerparameter als Zeitdauer des Betriebs oder der Betätigung des Mittels (P2, P1) definiert sind und insbesondere die Zeit der Ansteuerung eines dem Mittel (P2, P1) vorgeschalteten Relays (R1, R2) definieren.

17. Verfahren zum Betrieb des Wasserbilanzsteuerungssystems (1) nach Anspruch 15 oder 16, worin der Zeitraum (t) in mehrere Teilzeiträume (t1, t2, t3, ...) aufgeteilt ist, wobei für jeden der Teilzeiträume eigene Sollwerte definiert sind, wobei bevorzugt in einem jeweiligen der Teilzeiträume klimatisch ähnliche Bedingungen vorherrschen und besonders bevorzugt die Teilzeiträume den Jahreszeiten oder einzelnen Monaten entsprechen.

18. Verfahren zum Betrieb des Wasserbilanzsteuerungssystems (1) nach einem der Ansprüche 15 bis 17, wobei in der elektronischen Steuervorrichtung (6) Sollwerte für die zu erwartende Niederschlagsmenge, den Anteil an Verdunstung sowie den Anteil an Abfluss und dabei bevorzugt den Anteil des direkten Abflusses und den Anteil der Versickerung hinterlegt sind, wobei bevorzugt für jeden der hinterlegten Sollwerte eine zulässige Abweichungsmarge festgelegt ist.

19. Verfahren zum Betrieb des Wasserbilanzsteuerungssystems (1) nach Anspruch 18, worin, wenn in einem der Teilzeiträume (t2, t3, ...) für den vorangegangenen Teilzeitraum (t1, t2, ...) eine Abweichung von den Sollwerten und insbesondere der jeweils zulässigen Abweichungsmarge festgestellt wird, eine rechnerische Korrektur der Sollwerte für den aktuellen Teilzeitraum erfolgt, um die festgestellte Abweichung auszugleichen.

20. Verfahren zum Betrieb des Wasserbilanzsteuerungssystems (1) nach einem der Ansprüche 15 bis 19, wobei Wettervorhersagedaten mit den in der elektronischen Steuervorrichtung (6) hinterlegten Wetterdaten und/oder Sollwerten verglichen werden, um bei zu erwartenden Abweichungen eine rechnerische Anpassung der Steuerparameter vorzunehmen.

21. Verfahren zum Betrieb des Wasserbilanzsteuerungssystems (1) nach Anspruch 20, wobei, wenn die Wettervorhersagedaten ein Starkregenereignis mit einer zu erwartenden Niederschlagsmenge vorhersagen, die im Speicherraum (3) nicht mehr aufgenommen werden kann, die elektronische Steuervorrichtung (6) das Mittel (P1) zum steuerbaren Abführen von Wasser veranlasst, dem Abfluss (4) so lange Wasser zuzuführen, bis im Speicherraum (3) ausreichend Kapazität zur Aufnahme der zu erwartenden Niederschlagsmenge zur Verfügung steht.

22. Verfahren zum Betrieb des Wasserbilanzsteuerungssystems (1) nach einem der Ansprüche 15 bis 21, wobei vor der Inbetriebnahme des Wasserbilanzsteuerungssystems (1) unter Berücksichtigung von Wetterdaten für den Standort des Wasserbilanzsteuerungssystems (1) aus der Vergangenheit für das Wasserbilanzsteuerungssystem (1) eine mittlere Wasserbilanz ohne Steuerungseinflüsse errechnet und auf deren Basis dann unter Berücksichtigung zur Verfügung stehender Steuerungseinflüsse eine Ziel-Wasserbilanz festgelegt wird, für welche Zielwerte für die Aufteilung des auf der Auffangfläche niedergehenden Niederschlags (N) in Anteile von Verdunstung (v) und Abfluss (a), gegebenenfalls aufgeteilt in Versickerung (g) und direkten Abfluss (da), errechnet werden, wobei die Zielwerte gegebenenfalls jeweils in Teilzielwerte für die Teilzeiträume aufgeteilt sind.

**Claims**

1. A water balance control system (1) comprising

   a collecting area (2) for collecting precipitation,
   a storage space (3) which receives precipitation (N) running off from the collecting area (2),
   a delivery device (32) and an application area (7),
   an extraction line (31) with which water can be extracted from the storage space (3) to be supplied to the application area (7) via the delivery device (32),
   means (P2) for controllably conveying the water in the extraction line (31),
   a sensor (S1) for determining the water level in the storage space (3),
   at least one sensor (S2) for determining a climatic characteristic,
   an electronic evaluation unit (5) configured to receive data transmitted by the sensors (S1, S2) and to transmit them to an electronic control device (6),
   **characterized in that**
   the at least one sensor (S2) is a sensor for determining a climatic characteristic in the vicinity of the collecting area (2), and **in that** the electronic control device (6) is configured to control, using the data transmitted by the electronic evaluation unit (5), the means (P2) such that a predetermined water balance is achieved over a predetermined time period (t), which water balance is **characterized by** predetermined proportions of evaporation (v) and runoff (a) for the precipitation quantity which has fallen on the collecting area (2) during the time period (t).

2. The water balance control system (1) according to claim 1,
   wherein the application area (7) is the collecting area (2) or a, preferably vegetated, subarea thereof.

3. The water balance control system (1) according to claim 1 or 2,
   wherein the collecting area (2) and/or the application area (7) is divided into a plurality of subareas (2A, 2B, 2C; 7A, 7B), optionally spatially separated from each other, at least one of the subareas being vegetated.

4. The water balance control system (1) according to any one of the preceding claims,

   wherein the collecting area (2) is selected from at least one of the following areas:

   - a roof area (2A), in particular a green roof or gravel roof, including an underground parking garage roof,
   - a drivable area (2B), in particular a roadway or a parking lot,
   - a walkable area (2C), in particular an area provided with a floor covering such as gravel or slabs or at least partially concreted,

   and/or the application area (7), if different from the collecting area (2), is selected from at least one of the following areas:

   - an area used for horticultural and/or agricultural purposes,
   - a fallow area not used for horticultural and/or agricultural purposes, in particular a meadow.

5. The water balance control system (1) according to any one of the preceding claims,

wherein a draining line (30) with which water can be extracted from the storage space (3) to be supplied to a drain (4) via which it passes out of the water balance control system (1), and
means (P1) for controllably discharging water via the draining line (30) are provided, and
the electronic control device (6) is configured to control, using the data transmitted by the electronic evaluation unit (5), the means (P1, P2) such that a predetermined water balance is achieved over a predetermined time period (t), which water balance is **characterized by** predetermined proportions of evaporation (v) and runoff (a) for the precipitation quantity which has fallen on the application area (7) during the time period (t).

6. The water balance control system (1) according to any one of the preceding claims, wherein the storage space (3) is selected from a water retention box (33) of a green roof (D), a sealed buffer storage and a sealed drain trench, in particular arranged underground, or combinations thereof.

7. The water balance control system (1) according to any one of claims 5 and 6,
wherein the drain (4) is configured as an infiltration storage (40) and/or as a feed line (41) into a sewer system (K).

8. The water balance control system (1) according to any one of claims 5 to 7,
wherein the means (P2) for controllably conveying the water and the means (P1) for controllably discharging water are selected from a pump, a controllable valve, an automatically controlled draining throttle (34), an automatically operable slide valve and an automatically operable flap valve.

9. The water balance control system (1) according to any one of the preceding claims, wherein the delivery device (32) is an irrigation device, in particular a drip irrigation device, a sprinkler device or a nebulizing system, or the delivery device (32) is configured to deliver water into a water retention box (33) from which it is extractable for delivery onto the collecting area (2).

10. The water balance control system (1) according to any one of the preceding claims, wherein the sensor (S2) for determining a climatic characteristic is selected from a temperature sensor, a humidity sensor, and a solar radiation sensor.

11. The water balance control system (1) according to any one of the preceding claims, wherein the electronic evaluation unit (5) comprises means (50) for transmitting and receiving data which allow a wired and/or wireless transmission of data, the data transmission being preferably via mobile communication.

12. The water balance control system (1) according to any one of the preceding claims, wherein the electronic control device (6) is configured to include weather forecast data in the control, the weather forecast data preferably being forecast data for the location of the collecting area (2).

13. The water balance control system (1) according to any one of the preceding claims, wherein the time period (t) is several months and in particular one year.

14. The water balance control system (1) according to any one of the preceding claims, wherein the proportion of evaporation (v) is 31 to 100 %, preferably 40 to 98 %, more preferably 50 to 96 % and in particular 60 to 95 %, and/or the proportion of runoff (a) is 0 to 70 %, preferably 2 to 60 %, more preferably 4 to 50 % and in particular 5 to 40 %, in each case based on the precipitation falling on the collecting area (2), the proportion of the runoff (a) preferably being divided into infiltration (g) and direct runoff (da), wherein preferably the proportion of the direct runoff (da) in the total runoff (a) is in a range from 0 to 20 %, more preferably 0 to 15 % and in particular 0 to 10 %.

15. A method for operating the water balance control system (1) according to any one of the preceding claims, comprising the steps of:

- determining sensor data by means of the sensors (S1, S2) and transmitting the sensor data to the electronic evaluation unit (5),
- evaluating the sensor data in the electronic evaluation unit (5) and transmitting the evaluation results to the electronic control device (6), or transmitting the sensor data to the electronic control device (6) and evaluating the sensor data in the electronic control device (6) and generating evaluation results,
- comparing the evaluation results with target values stored in the electronic control device (6),
- determining control parameters in the electronic control device (6) based on the comparison between evaluation results and target values,

- transmitting the control parameters to the electronic evaluation unit (5), and
- controlling the means (P2) for controllably conveying water and, if applicable, the means (P1) for controllably discharging water based on the transmitted control parameters.

16. The method for operating the water balance control system (1) according to claim 15, wherein the control parameters are defined as a time duration of operation or actuation of the means (P2, P1) and in particular define the time of control of a relay (R1, R2) upstream of the means (P2, P1).

17. The method for operating the water balance control system (1) according to claim 15 or 16, wherein the time period (t) is divided into a plurality of sub-periods (t1, t2, t3, ...), wherein individual target values are defined for each of the sub-periods, wherein preferably climatically similar conditions exist in a respective one of the sub-periods, and wherein particularly preferably the sub-periods correspond to the seasons or individual months.

18. The method for operating the water balance control system (1) according to any one of claims 15 to 17, wherein target values for the expected precipitation quantity, the proportion of evaporation as well as the proportion of runoff and preferably the proportion of direct runoff and the proportion of infiltration are stored in the electronic control device (6), wherein preferably a permissible deviation range is defined for each of the stored target values.

19. The method for operating the water balance control system (1) according to claim 18, wherein, if in one of the sub-periods (t2, t3, ...) a deviation from the target values and in particular from the respective permissible deviation range is detected for the preceding sub-period (t1, t2, ...), a computational correction of the target values for the current sub-period is performed in order to compensate for the detected deviation.

20. The method for operating the water balance control system (1) according to any one of claims 15 to 19, wherein weather forecast data are compared with the weather data and/or target values stored in the electronic control device (6) to perform a computational adjustment of the control parameters in case of expected deviations.

21. The method for operating the water balance control system (1) according to claim 20, wherein, if the weather forecast data forecast a heavy rain event with an expected precipitation quantity which cannot be accommodated in the storage space (3), the electronic control device (6) causes the means (P1) for controllably discharging water to supply water to the drain (4) until sufficient capacity is available in the storage space (3) to accommodate the expected precipitation quantity.

22. The method for operating the water balance control system (1) according to any one of claims 15 to 21, wherein before the water balance control system (1) is put into operation, taking into account weather data for the location of the water balance control system (1) from the past, an average water balance without control influences is calculated for the water balance control system (1), based on which a target water balance is then determined taking into account available control influences, for which target values are calculated for the division of the precipitation (N) falling on the collecting area into proportions of evaporation (v) and runoff (a), if applicable divided into infiltration (g) and direct runoff (da), the target values each being divided, if applicable, into sub-target values for the sub-periods.

**Revendications**

1. Système (1) de régulation du bilan hydrique, comprenant

   une surface (2) de collecte pour collecter des précipitations,
   un espace de stockage (3) qui reçoit les précipitations (N) s'écoulant de la surface de collecte (2),
   un dispositif (32) de distribution et une surface d'application (7),
   une conduite d'extraction (31) avec laquelle l'eau peut être extraite de l'espace de stockage (3) afin d'être amenée à la surface d'application (7) via le dispositif de distribution (32),
   des moyens (P2) pour acheminer de manière contrôlée l'eau dans la conduite d'extraction (31),
   un capteur (S1) pour déterminer le niveau d'eau dans l'espace de stockage (3),
   au moins un capteur (S2) pour déterminer une caractéristique climatique,
   une unité d'évaluation électronique (5) configurée pour recevoir des données transmises par les capteurs (S1, S2) et les transmettre à un dispositif de commande électronique (6),
   *caractérisé en ce que*
   ledit au moins un capteur (S2) est un capteur pour déterminer une caractéristique climatique au voisinage de la surface (2) de collecte, et ***en ce que*** le dispositif de commande électronique (6) est configuré pour commander les moyens (P2) en utilisant les données transmises par l'unité d'évaluation électronique (5) de telle sorte qu'un bilan hydrique prédéterminé soit obtenu sur une période de temps prédéterminée (t), le bilan hydrique étant ***caractérisé par*** des proportions prédéterminées d'évaporation (v) et de ruissellement (a) pour la quantité de précipitation qui est tombée sur la surface (2) de collecte pendant la période de temps (t).

**2.** Système (1) de régulation du bilan hydrique selon la revendication 1,
dans lequel la surface d'application (7) est la surface de collecte (2), ou une sous-zone, de préférence végétalisée, de celle-ci.

**3.** Système (1) de régulation du bilan hydrique selon la revendication 1 ou 2,
dans lequel la surface (2) de collecte et/ou la surface d'application (7) est/sont divisée(s) en une pluralité de sous-zones (2A, 2B, 2C ; 7A, 7B), éventuellement séparées spatialement les unes des autres, au moins l'une des sous-zones étant végétalisée.

**4.** Système (1) de régulation du bilan hydrique selon l'une quelconque des revendications précédentes,

dans lequel la surface de collecte (2) est choisie parmi au moins l'une des surfaces suivantes :

- une surface de toiture (2A), en particulier une toiture végétale ou une toiture en gravier, y compris une toiture de garage de stationnement en sous-sol,
- une surface carrossable (2B), en particulier une voie de circulation ou une aire de stationnement,
- une surface piétonne (2C), en particulier une surface pourvue d'un revêtement de sol tel que du gravier ou des dalles, ou au moins partiellement bétonné,

et/ou la surface d'application (7), si elle est différente de la surface (2) de collecte, est choisie parmi au moins l'une des surfaces suivantes :

- une surface utilisée à des fins horticoles et/ou agricoles,
- une surface en friche non utilisée à des fins horticoles et/ou agricoles, en particulier une prairie.

**5.** Système (1) de régulation du bilan hydrique selon l'une quelconque des revendications précédentes,

dans lequel une conduite d'évacuation (30) avec laquelle de l'eau peut être extraite de l'espace de stockage (3) pour être amenée à un drain (4) grâce auquel elle ressort du système (1) de régulation du bilan hydrique, et des moyens (P1) pour évacuer l'eau de manière contrôlable via la conduite d'évacuation (30) sont prévus, et le dispositif de commande électronique (6) est configuré pour commander, en utilisant les données transmises par l'unité d'évaluation électronique (5), les moyens (P1, P2) de telle sorte qu'un bilan hydrique prédéterminé soit obtenu sur une période de temps (t) prédéterminée, ledit bilan hydrique étant ***caractérisé par*** des pourcentages prédéterminés d'évaporation (v) et de ruissellement (a) pour la quantité de précipitation qui est tombée sur la surface d'application (7) pendant la période de temps (t).

**6.** Système (1) de régulation du bilan hydrique selon l'une quelconque des revendications précédentes,
dans lequel l'espace de stockage (3) est choisi entre un bac de rétention (33) d'une toiture végétale (D), un réservoir tampon hermétique et une tranchée de drainage hermétique, en particulier ménagés en sous-sol, ou des combinaisons de ceux-ci.

**7.** Système (1) de régulation du bilan hydrique selon l'une quelconque des revendications 5 et 6,
dans lequel le drain (4) prend la forme d'un stockage d'infiltration (40) et/ou d'une conduite d'alimentation (41) dans un système (K) de drainage.

**8.** Système (1) de régulation du bilan hydrique selon l'une quelconque des revendications 5 à 7,
dans lequel les moyens (P2) pour acheminer de manière contrôlée l'eau et les moyens (P1) pour évacuer l'eau de manière contrôlable sont choisis entre une pompe, une vanne contrôlable, un étranglement d'écoulement (34) contrôlé de manière automatique, une vanne à tiroir contrôlée de manière automatique, et un clapet actionné de manière automatique.

**9.** Système (1) de régulation du bilan hydrique selon l'une quelconque des revendications précédentes,

dans lequel le dispositif (32) de distribution est un dispositif d'irrigation, en particulier un système d'irrigation goutte à goutte, un système d'arrosage par aspersion, ou un système de nébulisation, ou bien le dispositif (32) de distribution est configuré pour acheminer l'eau dans un bac de rétention (33) d'où elle peut être extraire pour sa distribution sur la surface collectrice (2).

10. Système (1) de régulation du bilan hydrique selon l'une quelconque des revendications précédentes, dans lequel le capteur (S2) pour la détermination d'une caractéristique climatique est choisi entre un capteur de température, un capteur d'humidité, et un capteur de rayonnement solaire.

11. Système (1) de régulation du bilan hydrique selon l'une quelconque des revendications précédentes, dans lequel l'unité d'évaluation électronique (5) comprend des moyens (50) pour transmettre et recevoir des données qui permettent une transmission câblée et/ou sans fil des données, la transmission des données étant réalisée, de manière préférée, par communication mobile.

12. Système (1) de régulation du bilan hydrique selon l'une quelconque des revendications précédentes, dans lequel le dispositif (6) de commande électronique est configuré pour comporter des données de prévisions météorologiques dans la commande, les données de prévisions météorologiques étant, de manière préférée, des données prévisionnelles pour le site de la surface collectrice (2).

13. Système (1) de régulation du bilan hydrique selon l'une quelconque des revendications précédentes, dans lequel la période de temps (t) est de plusieurs mois, et en particulier d'un an.

14. Système (1) de régulation du bilan hydrique selon l'une quelconque des revendications précédentes, dans lequel le pourcentage d'évaporation (v) est de 31 à 100 %, de manière préférée de 40 à 98 %, plus préférablement de 50 à 96 % et en particulier de 60 à 95 %, et/ou le pourcentage de ruissellement (a) est de 0 à 70 %, de manière préférée de 2 à 60 %, plus préférablement de 4 à 50 %, et en particulier de 5 à 40 %, sur la base dans chaque cas des précipitations tombant sur la surface de collecte (2), le pourcentage de ruissellement (a) étant de manière préférée divisé en infiltration (g) et en ruissellement direct (da), dans lequel, de manière préférée, le pourcentage du ruissellement direct (da) dans le ruissellement total (a) est dans une fourchette de 0 à 20 %, plus préférablement de 0 à 15 %, et en particulier de 0 à 10 %.

15. Méthode d'utilisation du système (1) de régulation du bilan hydrique selon l'une quelconque des revendications précédentes, comprenant les étapes consistant à :

- déterminer les données des capteurs au moyen des capteurs (S1, S2) et transmettre les données des capteurs à l'unité d'évaluation électronique (5),
- évaluer les données des capteurs dans l'unité d'évaluation électronique (5) et transmettre les résultats de l'évaluation au dispositif (6) de commande électronique, ou transmettre les données des capteurs au dispositif (6) de commande électronique et évaluer les données des capteurs dans le dispositif (6) de commande électronique, et générer les résultats de l'évaluation,
- comparer les résultats de l'évaluation avec des valeurs cibles stockées dans le dispositif (6) de commande électronique,
- déterminer les paramètres de commande dans le dispositif (6) d'évaluation électronique sur la base de la comparaison entre les résultats des évaluations et les valeurs cibles,
- transmettre les paramètres de commande à l'unité (5) d'évaluation électronique, et
- contrôler les moyens (P2) pour acheminer l'eau de manière contrôlable et, le cas échéant, les moyens (P1) pour décharger l'eau de manière contrôlable sur la base des paramètres de commande transmis.

16. Méthode d'utilisation du système (1) de régulation du bilan hydrique selon la revendication 15, dans laquelle les paramètres de commande sont définis comme une durée de fonctionnement ou d'actionnement des moyens (P2, P1), et en particulier définissent la durée de commande d'un relais (R1, R2) en amont des moyens (P2, P1).

17. Méthode d'utilisation du système (1) de régulation du bilan hydrique selon la revendication 15 ou 16, dans laquelle la période de temps (t) est divisée est une pluralité de sous-périodes (t1, t2, t3, ...), dans lesquelles des valeurs cibles individuelles sont définies pour chacune des sous-périodes, dans laquelle des conditions de préférence similaires d'un point de vue climatique existent dans l'une, respective, des sous-périodes, et dans laquelle, de manière particulièrement préférée, les sous-périodes correspondent aux saisons ou aux mois individuels.

**18.** Méthode d'utilisation du système (1) de régulation du bilan hydrique selon l'une quelconque des revendications 15 à 17, dans laquelle des valeurs cibles pour la quantité de précipitation attendue, le pourcentage d'évaporation ainsi que le pourcentage de ruissellement, et de manière préférée le pourcentage d'écoulement direct et le pourcentage d'infiltration, sont stockés dans le dispositif de commande électronique (6), dans laquelle de manière préférée une fourchette de déviation admissible est définie pour chacune des valeurs cibles stockées.

**19.** Méthode d'utilisation du système (1) de régulation du bilan hydrique selon la revendication 18, dans laquelle, si, dans une des sous-périodes (t2, t3, ...), une déviation par rapport aux valeurs cibles, et en particulier par rapport à la fourchette de déviation admissible respective, est détectée pour la sous-période précédente (t1, t2, ...), une correction computationnelle des valeurs cibles pour la sous-période courante est effectuée de manière à compenser la déviation détectée.

**20.** Méthode d'utilisation du système (1) de régulation du bilan hydrique selon l'une quelconque des revendications 15 à 19, dans laquelle les données des prévisions météorologiques sont comparées aux données météo et/ou aux valeurs cibles stockées dans le dispositif de commande électronique (6) pour réaliser un ajustement computationnel des paramètres de commande dans le cas des déviations attendues.

**21.** Méthode d'utilisation du système (1) de régulation du bilan hydrique selon la revendication 20, dans laquelle, si les données des prévisions météorologiques prédisent une forte pluie avec une quantité de précipitation attendue qui ne peut pas être accueillie dans l'espace de stockage (3), le dispositif de commande électronique (6) fait que les moyens (P1) pour évacuer l'eau de manière contrôlable provoquent l'envoi d'eau dans le drain (4) jusqu'à ce qu'une capacité suffisante soit disponible dans l'espace de stockage (3) pour recevoir la quantité de précipitation attendue.

**22.** Méthode d'utilisation du système (1) de régulation du bilan hydrique selon l'une quelconque des revendications 15 à 21, dans laquelle, avant que le système (1) de régulation du bilan hydrique ne soit mis en fonctionnement, en prenant en compte les données météo pour l'emplacement du système (1) de régulation du bilan hydrique du passé, un bilan hydrique moyen sans influences de commande est calculé pour le système (1) de régulation du bilan hydrique, sur la base duquel un bilan hydrique cible est alors déterminé en prenant en compte les influences de commande disponibles, pour lesquelles des valeurs cibles sont calculées pour la division des précipitations (N) tombant sur la surface de collecte en pourcentages d'évaporation (v) et de ruissellement (a), le cas échéant divisées en infiltration (g) et en ruissellement direct (da), les valeurs cibles étant chacune divisée, le cas échéant, en valeurs de sous-cible pour les sous-périodes.

Fig. 1

Fig. 2

Fig. 3

Fig. 4

Fig. 5

Fig. 6

Fig. 7

S01

S02

S03

S1                                    S1'

S2                                    S2'

S3                                    S3'

S4                                    S4'

S5                                    S5'

S6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160135381 A1
- EP 2982810 A1
- EP 3202995 A1
- WO 2005026053 A2
- EP 1260640 A1
- EP 3460133 A1
- EP 1001107 A1

**In der Beschreibung aufgeführte Nicht-Patentliteratur**

- **ALLEN, R. ; PEREIRA, L. ; RAES, D. ; SMITH, M.** Crop Evapotranspiration: Guidelines for computing crop water requirements. *Irrigation and Drainage Paper,* 1998, (56
- **SIMUNEK, J. ; SEJNA, M. ; SAITO, H. ; SAKAI, M. ; VAN GENUCHTEN, M.** The HYDRUS-1D Software Package for Simulating the One-Dimensional Movement of Water, Heat and Multiple Solutes in Variably-Satured Media. 2013
- **CAMILLO, P. ; GURNEY, R.J.** a resistance parameter for bare-soil evaporation models. *Soil Sciences,* 1986, (141), 742-744